# EUROPEAN PATENT APPLICATION

(11) **EP 3 822 607 A1**
(43) Date of publication of application: **19.05.2021**
(21) Application number: 19919060.4
(22) Date of filing: 15.05.2019
(51) Int. Cl.: G01M 13/025

(54) **HIGH-PRECISION COMPREHENSIVE PERFORMANCE TEST INSTRUMENT FOR PRECISE SPEED REDUCER FOR ROBOT**

(30) Priority: 08.03.2019 CN 201910175593
(71) Applicant: Tianjin University, Tianjin 300072 (CN)
(72) Inventor: QIU, Zurong, Tianjin 300072 (CN); XUE, Jie, Tianjin 300072 (CN); HU, Wenchuan, Tianjin 300072 (CN); FANG, Lin, Tianjin 300072 (CN); YOU, Yue, Tianjin 300072 (CN); YU, Zhen, Tianjin 300072 (CN); LI, Xinghua, Tianjin 300072 (CN)
(74) Representative: Tergau & Walkenhorst Patentanwälte PartGmbB
(86) International application number: PCT/CN2019/087037
(87) International publication number: WO 2020/181649

(57) **Abstract**

The present invention discloses a comprehensive performance measurement instrument of high precision reducer for industrial robot, comprising: a MMIS, a MMOS, a mechanical adaptor, a workbench, a three-dimensional movement system and an information processing module. The MMIS and MMOS are used for performing angular measurement and torque measurement of an input end and a output end of a tested reducer, and dynamic and static test functions transformation of the tested reducer under different parameters, and providing loading power or loading capacity for the measurement instrument; the mechanical adaptor is used for fixing the tested reducer. The MMIS is fixedly connected to the three-dimensional movement system, and is driven by the three-dimensional movement system to realize movement along horizontal and vertical directions, as well as rotation in the plane where the horizontal plane and the vertical plane intersect. The present invention enhances the torsional rigidity of the measurement instrument through an adequate structural design, optimizes the layout of sensors, reduces the source of measurement error, and adds an adaptor to achieve rapid replacement of the tested reducer. The measurement instrument of the present invention can realize the dynamic and static measurement process of the precision reducer and can adapt to different structure forms of precision reducer.

## Description

### TECHNICAL FIELD

The present invention relates to the field of reducer measurement, and in particular to a comprehensive performance measurement instrument of high precision reducer for industrial robot, which is used for automatic and online measurement of comprehensive performance of precision reducers.

### BACKGROUND OF THE PRESENT INVENTION

Precision reducer is the core component of robot motion system. Its performance test is the key to improve robot positioning accuracy, stability, and length of service life. With the rapid development of the industrial robot, the demand for precision reducers for robots has gradually increased, the scale of production has gradually expanded, and the demand for online measurement of precision reducers has continued to expand, especially for manufacturers to improve production quality and users of precision reducers to obtain the performance indicators. Therefore, a comprehensive performance measurement instrument of high precision reducer for industrial robots is required.

At present, the reducer measurement instrument mainly include horizontal type and vertical type, which adopts the measuring method that the tested reducer is connected with the measuring components and others in series. In terms of such structure of instrument and layout of sensors, there are some inadequate design factors in these two types of instruments. Some horizontal measurement instruments use the cantilever to support the required parts on the horizontal sliding guide rails, and some vertical measurement instruments use multi-pillar support method. Such measurement instruments perform testing under large torque condition, a severe torsional vibration will generated due to the lack of rigidity, and further will aggravate the coaxiality error of the measurement instrument shaft system. In addition, the replacement efficiency of the tested reducer is low, which cannot meet the requirement of rapid online measurement of mass reducers, which is time wasting and energy consuming.

### SUMMARY OF THE PRESENT INVENTION

The purpose of the present invention is to overcome the shortcomings in the prior art, and to provide a comprehensive performance measurement instrument of high precision reducer for industrial robot. The measurement instrument of the present invention can realize the dynamic and static measurement process of the precision reducer and can adapt to different structure forms of precision reducer. The measurement instrument of the present invention takes a vertical type as the basic model, enhances the torsional rigidity of the measurement instrument through an adequate structural design, optimizes the layout of sensors, reduces the source of measurement error, and adds a mechanical adaptor to achieve rapid replacement of the tested reducer.

The technical solutions of the present invention are as follows:

A comprehensive performance measurement instrument of high precision reducer for industrial robot, comprising:
a workbench, used as test benchmark for the measurement instrument;
a three-dimensional movement system;
a measurement module on the input side (hereinafter referred to as MMIS), used for performing angular measurement and torque measurement of an input end of a tested reducer, and dynamic and static test functions transformation of the tested reducer under different parameters, and providing loading power for a measurement instrument; the MMIS is fixedly connected to the three-dimensional movement system, and is driven by the three-dimensional movement system to realize movement along horizontal and vertical directions, as well as rotation in the plane where the horizontal plane and the vertical plane intersect;
a measurement module on the output side (hereinafter referred to as MMOS), used for performing the functions transformation among angle measurement and torque measurement of an output end of the tested reducer, and dynamic and static test functions transformation of the tested reducer, and providing loading power or loading capacity for a measurement instrument; the MMOS is suspended on the workbench and extended downwardly from the workbench;
a mechanical adaptor, used for fixing the tested reducer; during operation, an input end of the mechanical adaptor is positioned and clamped to the MMIS, and the output end is positioned and clamped to the MMOS;
information processing module, used for performing data transmission with the three-dimensional movement system, the MMIS and the MMOS.

Further, the three-dimensional movement system comprises: a horizontal-direction-movement system, a vertical-direction-movement system, a vertical guide rail mounting rack, a rack for connecting with MMIS, a rotary table system and a rotary table mounting rack.

The horizontal-direction-movement system is fixedly arranged on the workbench.

The vertical-direction-movement system is fixedly arranged on the vertical guide rail mounting rack, the vertical guide rail mounting rack is connected to the horizontal-direction-movement system and is capable of moving in the horizontal direction along the horizontal-direction-movement system.

The rotary table system is fixed on the rotary table mounting rack, the rotary table mounting rack is connected to the vertical-direction-movement system and is capable of moving in the vertical direction along the vertical-direction-movement system.

The horizontal-direction-movement system, the vertical-direction-movement system and the rotary table system are connected with the information processing module, respectively, and receive the instruction signals to drive by the information processing module.

The rack for connecting with MMIS is used to connect the MMIS and the three-dimensional movement system, the rack for connecting with MMIS is connected to the rotary table system, and is capable of rotating with the rotary table system in the plane where the horizontal plane and the vertical plane intersect.

Further, the MMIS comprises a drive system, a test function conversion system, a sensors system and a cylinder.

The drive system of MMIS includes a servo motor for controlling the speed, position and torque in the measurement shafting of MMIS, and a first upper end flange of MMIS for fixing the servo motor; the first upper end flange of MMIS is fixedly arranged on the upper end of the cylinder of MMIS.

The test function conversion system of MMIS is used to perform separation, transmission and braking functions of the measurement shafting of MMIS, so that the conversion of the test functions of the tested reducer can be realized; the test function conversion system, which is arranged inside the cylinder of MMIS, comprises an execution module, a detection module, a driving module, a braking and fixing module and a shafting module.

The execution module of the test function conversion system of MMIS includes a movable outer sleeve in MMIS, a bearing in MMIS and a movable splined sleeve in MMIS; an inner ring of the bearing is connected with the movable splined sleeve in MMIS, and the outer ring is connected with the movable outer sleeve in MMIS; the interior of the movable splined sleeve is provided with an internal spline which is capable of connecting with an external spline of the input shaft of MMIS and an external spline of the output shaft of the shafting module; and the exterior of the movable splined sleeve of MMIS is provided with an external spline which is capable of connecting with an internal spline of a second brake sleeve of MMIS of the braking and fixing module.

The detection module of the test function conversion system of MMIS uses a second displacement sensor in MMIS to detect the position of the execution module, and determines whether the movable splined sleeve of MMIS reaches the preset position in axial position.

The driving module of the test function conversion system of MMIS includes two driving sub modules which are symmetrically placed along the radial direction of shafting. Each of the driving sub module comprise a second hydraulic cylinder of MMIS, a second Ω-shape rack and a first U-shape rack; one end of the first U-shape rack is screwed on the piston rod of the second hydraulic cylinder by a screw, while the other end is screwed with a ball plunger in MMIS, the ballhead of the ball plunger in MMIS is placed opposite to the screw on the piston rod of the second hydraulic cylinder; a first spring is pressed between an intermediate crossbeam between the second Ω-shape rack and the ballhead of the ball plunger in MMIS; the bottom side of the second Ω-shape rack is connected to the eversion flange of the movable outer sleeve in MMIS, so that the moving of the piston rod of the second hydraulic cylinder drives the second Ω-shape rack to move, thereby driving the execution module to move.

The braking and fixing module of the test function conversion system of MMIS includes a second brake sleeve in MMIS and an upper end cover of the test function conversion system in MMIS; the central portion of the second brake sleeve is provided with an internal spline which is capable of connecting with an external spline of the movable splined sleeve in MMIS; the second brake sleeve is fixed on the upper end cover of test function conversion system in MMIS, and the upper end cover is fixed on the inner wall of the cylinder of MMIS.

The shafting module of the test function conversion system of MMIS includes an input shaft and an output shaft in MMIS being coaxially arranged with each other; one end of the input shaft in MMIS is connected to an output shaft of the servo motor, while the other end penetrates the center of the upper end cover of test function conversion system in MMIS and extends into the second brake sleeve in MMIS, and the other end of the input shaft is opposite to the output shaft in MMIS; one end of the output shaft in MMIS is connected to the first torque transducer rotor of the sensors system of MMIS, while the other end is opposite to the input shaft in MMIS; a gap is provided between the opposing input in MMIS shaft and the output shaft, and both the opposing input shaft and the output shaft are provided with an external spline connecting with the internal spline of the movable splined sleeve in MMIS, a central internal spline of the second brake sleeve in MMIS is arranged at the junction of the input shaft and the output shaft in MMIS; and the movable splined sleeve in MMIS is sleeved outside the input shaft in MMIS, through the movement of the execution module, the movable splined sleeve in MMIS realizes three operating types of only connecting with the input shaft, connecting with the input shaft and the output shaft, and connecting with the input shaft and the second brake sleeve in MMIS.

The second displacement sensor in the detection module and the second hydraulic cylinder in the driving module of the test function conversion system of MMIS are communicated with the information processing module, respectively; and the information processing module receives data from the second displacement sensor and then sends an instruction signal to the second hydraulic cylinder.

The sensors system of MMIS is arranged inside the cylinder of MMIS, including a torque measurement system of MMIS, an angular measurement system of MMIS, a high-precision shaft, bearingset and a first lower end flange of MMIS; the torque measurement system comprises a first torque transducer including a first torque transducer rotor and a first torque transducer stator in a separated state; the first torque transducer stator is connected to the information processing module for transmitting data, one end of the first torque transducer rotor is connected to the high-precision shaft, while the other end is connected to the output shaft of MMIS; the angular measurement system includes a first ring and two first readheads symmetrically placed along the radial direction of shafting; each of the first readheads is connected to the information processing module for transmitting data, the first ring is fixedly connected to the high-precision shaft and rotates therewith; the connecting end face of the high-precision shaft and the mechanical adaptor is provided with the internal spline which is connected with the external spline of the second connecting shaft, the high-precision shaft is connected with the inner ring of the bearingset, while the outer ring of the bearingset is connected with the central hole of the first lower end flange of MMIS; and the first lower end flange of MMIS is fixed on the lower end of the cylinder of MMIS.

Wherein, the test function conversion system of MMIS also comprises a mechanical auxiliary positioning instrument, including a second spring, a first steel ball and three first V-shape annular grooves; the second spring and the first steel ball are embedded in the connecting part of the movable splined sleeve and a shaft hole of the input shaft in MMIS; three first V-shape annular grooves are slotted on the input shaft in MMIS along the circumferential direction of the input shaft, and are respectively located at: the position of the first steel ball and the second spring when the internal spline of the movable splined sleeve only connecting with the external spline of the input shaft and the external spline of the movable splined sleeve is in a free state; the position of first steel ball and the second spring when the internal spline of the movable splined sleeve connecting with the external splines of the input shaft and the output shaft, and the external spline of the movable splined sleeve is in a free state; the position of first steel ball and the second spring when the internal spline of the movable splined sleeve connecting with the external spline of the output shaft, and the external spline of the movable splined sleeve connecting with the internal spline of the second brake sleeve.

Wherein, the movable outer sleeve in MMIS is the bearing support connecting with the outer ring of the bearing; the bearing of the MMIS is an aligning bearing, which serves as a flexible connection that drives the axial displacement of the movable outer sleeve and does not affect the rotation of the movable splined sleeve of the MMIS.

Wherein, the bearingset comprises two individual bearings arranged on the same support, and can simultaneously adjust the clearance of the two individual bearings arranged on the same support so as to ensure the rotation precision of the angular measurement system of MMIS.

Further, the MMOS comprises a drive system, a test function conversion system of MMOS, a MMOS sensors system, a cylinder and a second lower end flange.

The drive system of MMOS comprises a loading motor for controlling the speed, position and torque of the shafts of the MMOS and a gear system that converts a high-speed and low-torque provided by the loading motor to a low-speed and high-torque. The gear system comprises a gear box and a gear train, the output shaft of the loading motor is connected to an input shaft of the gear train; a housing of the loading motor is fixed on the gear box which is fixed on the second lower end flange of MMOS.

The test function conversion system of MMOS is used to realize the separation, transmission and braking functions of the shaft in MMOS so as to realize the conversion of different test functions of the tested reducer. The test function conversion system is arranged inside the cylinder of MMOS, comprising an execution module, a detection module, a braking and fixing module and a shafting module in MMOS.

The execution module comprises a movable outer sleeve in MMOS, a MMOS bearing and a movable splined sleeve in MMOS; the inner ring of the MMOS bearing is connected with the movable splined sleeve in MMOS, and the outer ring is connected with the movable outer sleeve in MMOS; the interior of the movable splined sleeve is provided with an internal spline which is capable of connecting with an external spline of the input shaft of MMOS and an external spline of the output shaft of the shafting module; and the exterior of the movable splined sleeve of MMOS is provided with an external spline which is capable of connecting with an internal spline of a first brake sleeve of MMOS of the braking and fixing module.

The detection module of the test function conversion system of MMOS uses a first displacement sensor in MMOS to detect the position of the execution module, and determines whether the movable splined sleeve of MMOS reaches the preset position in axial position.

The driving module of the test function conversion system of MMOS includes two driving sub modules which are symmetrically placed along the radial direction of shafting. Each of the driving sub modules comprises a first hydraulic cylinder in MMOS and a first Ω-shape rack; the first hydraulic cylinder is fixed on the second lower end flange of MMOS, a ball plunger in MMOS is screwed on the top of the piston rod of the first hydraulic cylinder; and an intermediate crossbeam between the first Ω-shape racks contacts with the ballhead of the ball plunger, and a fourth spring is pressed between the intermediate crossbeam and the ballhead. The bottom side of the first Ω-shape rack is connected to the eversion flange of the movable outer sleeve in MMOS, so that the moving of the piston rod of the first hydraulic cylinder drives the first Ω-shape rack to move, thereby driving the execution module to move.

The braking and fixing module of the test function conversion system of MMOS includes a first brake sleeve which fixed on the inner wall of the cylinder of MMOS; the central portion of the first brake sleeve is provided with an internal spline which is capable of connecting with an external spline of the movable splined sleeve in MMOS.

The shafting module of the test function conversion system of MMOS includes an input shaft and an output shaft being coaxially arranged with each other; the input shaft is the output shaft of the gear train, and one end of the input shaft in MMOS penetrates the center of the second lower end flange of MMOS and is opposite to the output shaft in MMOS; one end of the output shaft is connected to the second torque transducer rotor of the sensors system of MMOS, while the other end is opposite to the input shaft in MMOS; a gap is provided between the opposing input shaft and the output shaft, and both the opposing input shaft and the output shaft are provided with an external spline connecting with the internal spline of the movable splined sleeve in MMOS, a central internal spline of the first brake sleeve is arranged at the junction of the input shaft and the output shaft in MMOS; and the movable splined sleeve in the MMOS is sleeved outside the input shaft of MMOS, through the movement of the execution module, the movable splined sleeve realizes three operating types of only connecting with the input shaft, connecting with the input shaft and the output shaft, and connecting with the input shaft and the first brake sleeve in MMOS.

The first displacement sensor in the detection module and the first hydraulic cylinder in the driving module of the test function conversion system of MMOS are communicated with the information processing module, respectively; and the information processing module receives data from the first displacement sensor and then sends an instruction signal to the first hydraulic cylinder.

The sensors system of MMOS is arranged inside the cylinder of MMOS, including a torque measurement system of MMOS, an angular measurement system of MMOS, a dense ball bearing system and a second upper end flange of MMOS. The torque measurement system comprises a second torque transducer including a second torque transducer rotor and a second torque transducer stator in a separated state; the second torque transducer stator is connected to the information processing module for transmitting data, one end of the second torque transducer rotor is connected to a spline of the dense ball bearing system, while the other end is connected to the output shaft of MMOS; the angular measurement system includes a second ring and two second readheads symmetrically placed along the radial direction of shafting; each of the second readheads is connected to the information processing module for transmitting data, the second ring is fixedly connected to the spline of the dense ball bearing system and rotates therewith. The dense ball bearing system acting as a transmission part comprises a spindle and the mechanical adaptor is provided with an external involute spline which is coupled with the internal spline of the dense ball bearing system in measurement process; and the second upper end flange of MMOS is fixed on the upper end face of the cylinder of MMOS.

The second lower end flange of MMOS is fixed on the lower end of the cylinder of MMOS.

Wherein, the test function conversion system of MMOS also comprises a mechanical auxiliary positioning instrument, including a third spring, a second steel ball and second V-shape annular grooves; the third spring and the second steel ball are embedded in the connection part of the movable splined sleeve and a shaft hole of the input shaft in MMOS; three second V-shape annular grooves are slotted on the input shaft in MMOS along the circumferential direction of the input shaft, and are respectively located at: the position of the second steel ball and the third spring when the internal spline of the movable splined sleeve only connecting with the external spline of the input shaft, and the external spline of the movable splined sleeve is in a free state; the position of second steel ball and the third spring when the internal spline of the movable splined sleeve connecting with the external splines of the input shaft and the output shaft, and the external spline of the movable splined sleeve is in a free state; the position of second steel ball and the third spring when the internal spline of the movable splined sleeve connecting with the external spline of the output shaft, and the external spline of the movable splined sleeve connecting with the internal spline of the first brake sleeve.

Wherein, the movable outer sleeve in MMOS is the bearing support connecting with the inner ring of the bearing; the bearing of the MMOS is an aligning bearing, which serves as a flexible connection that drives the axial displacement of the movable outer sleeve and does not affect the rotation of the movable splined sleeve in the MMOS.

Wherein, the dense ball bearing system comprises a second sleeve and balls that are densely connected with an interference fit between the spindle and the second sleeve; the second sleeve is fixed on the inner wall of the cylinder of MMOS, and the balls are positioned via a retainer which is located between the spindle and the second sleeve.

Further, the mechanical adaptor comprises a tested reducer, a second connecting shaft for connecting with MMIS, a first connecting shaft for connecting with MMOS and an adaptor housing; one end of the second connecting shaft is fixed on an input end of the tested reducer, while the other end is provided with an external spline which is capable of connecting with an internal spline of a shaft in MMIS; one end of the first connecting shaft is fixed on an output end of the tested reducer, while the other end is provided with an external spline which is capable of connecting with an internal spline of the spline of the dense ball bearing system; a eversion flange is provided on each side of the adaptor housing, one eversion flange drives a compressing plate via a plurality of rotating hydraulic cylinders to press and fix on the MMIS, and the other eversion flange is fixed to the MMOS via a four-bar clamp system.

Wherein, a plurality of rotating hydraulic cylinders are fixed and arranged along the circumferential direction of the first lower end flange of MMIS; the rotating hydraulic cylinders includes a third piston rod of rotating hydraulic cylinder and the compressing plate, the compressing plate is in the shape of an oblong hole, an ellipse, or a rectangle, and the center of the compressing plate is fixed on the top end of the third piston rod, and can rotate with the rotation of the third piston rod. By changing the oil inlets and outlets of the rotating hydraulic cylinders, the third piston rod can rotate circumferentially so as to tightly press the upper end eversion flange of the adaptor housing. The distance between the compressing plate and the first lower end flange of MMIS equals to the thickness of the eversion flange of the adaptor housing. The rotating hydraulic cylinders are communicated with the information processing module for transmitting oil inlet and oil outlet instructions.

Wherein, a plurality of four-bar clamp system are provided in the present invention, each of the four-bar clamp system comprise a third hydraulic cylinder in clamp system, a second piston rod of the third hydraulic cylinder in clamp system, a pressing plate, a connecting rod, a base and a base plate; the end face of the third hydraulic cylinder and the base plate are fixed on the workbench; one end of the connecting rod is hinged on the base plate, and the other end is connected to the middle part of the pressing plate through a second hinge column; one end of the pressure plate is connected to the second piston rod of the third hydraulic cylinder through a third hinge column, and the other end is connected with a roller. By changing the oil inlets and outlets of the third hydraulic cylinder in clamp system, the expansion and contraction of the second piston rod can be realized, and the pressing plate connected with the second piston rod moves back and forth simultaneously so that the lower end eversion flange of the adaptor housing is compressed or uncompressed; the third hydraulic cylinder is communicated with the information processing module for transmitting oil inlet and oil outlet instructions.

Further, the connection part between the MMIS and the three-dimensional movement system is arranged with a flexible mechanism for automatic converting the displacement datum of the guide rail in MMIS and the measurement datum.

Wherein, the flexible mechanism is used for the flexible connection between the rack for connecting with MMIS in the three-dimensional displacement system and the flange of the cylinder of MMIS. A plurality of flexible mechanisms are provided in the present invention, and are circumferentially arranged along the connection between the MMIS and the three-dimensional displacement system. Each of the flexible mechanism comprise a first retaining ring, a second retaining ring, a fifth spring, a sixth spring, a bolt and a nut; the rack for connecting with MMIS has same coaxial holes at the same positions around the flange of the MMIS cylinder; the bolts penetrate the coaxial holes and the nuts are screwed to the bottom ends of the bolts, respectively; the first retaining ring and the second retaining ring, which are connected to the bolts, are positioned on both sides of the rack for connecting with MMIS and the flange of the cylinder of MMIS, respectively. The fifth spring and sixth spring are sleeved on the bolts; and the fifth spring, in a compressed state, is located between the first retaining ring and the rack for connecting with MMIS; and the sixth spring, in a compressed state, is located between the second retaining ring and the flange of the cylinder of MMIS; the inner diameters of the fifth spring and sixth spring are larger than the outer diameter of the screw thread of the bolt.

The technical solutions of the present invention have the following beneficial effects:
the comprehensive performance measurement instrument of the present invention can realize multi-parameter measurement of the reducer through the test function conversion system, and is suitable for various reducers with coaxial or non-coaxial input end and the output end. A vertical cylindrical structure can be used to ensure enough rigidity to the measurement instrument, so that the measurement errors are easily compensated, thus guaranteeing the measurement accuracy. Meanwhile, the present invention adopts a mechanical adaptor, and an automatic clamp system is added between the MMIS,MMOS and the adaptor, which improves the measurement efficiency of the tested reducer and is suitable for multi-parameter measurement of mass reducers. In addition, a flexible mechanism is adopted for converting the displacement datum of the guide rails and the measurement datum, so that when the three-dimensional movement system drives the MMIS to move and connected with the mechanical adaptor and the input end of the reducer, the guide rails movement accuracy can be reduced so as to achieve automatic conversion of displacement datum of the guide rails and the measurement datum, thus realizing separation of displacement mechanism of the guide rails and the measurement system during measurement.

### BRIEF DESCRIPTION OF THE DRAWINGS

FIG. 1 is an overall view of the instrument according to the present invention;
FIG.2 is a perspective view of the instrument according to the present invention after being adapted to a right-angle type of reducer;
FIG.3 is a perspective view of the main part of the instrument according to the present invention;
FIG.4 is a schematic diagram of the three-dimensional movement system of the present invention;
FIG.5 is a cross-sectional view of the overall internal structure of the MMIS of the present invention;
FIG.6 is a cross-sectional view of the internal structure of the sensors system of MMIS according to the present invention;
FIG.7 is a cross-sectional view of the overall internal structure of the MMOS of the present invention;
FIG.8 is a cross-sectional view of the internal structure of the sensors system of MMOS according to the present invention;
FIG.9 is a cross-sectional view of the internal structure of the mechanical adaptor according to the present invention;
FIG.10 is a schematic diagram of the test function conversion system of MMOS according to the present invention, in which the first brake sleeve in MMOS is removed;
FIG.11 is a schematic diagram of the test function conversion system of MMOS according to the present invention;
FIG.12 is a schematic cross-sectional view of the test function conversion system of MMOS according to the present invention, in which the shafts are in the separation state;
FIG.13 is a schematic cross-sectional view of the test function conversion system of MMOS according to the present invention, in which the shafts are in the driving state;
FIG.14 is a schematic cross-sectional view of the test function conversion system of MMOS according to the present invention, in which the shafts are in the braking state;
FIG.15 is a schematic cross-sectional view of the connection of the ball plunger in MMOS of the test function conversion system of MMOS according to the present invention;
FIG.16 is a cross-sectional view of the internal structure of the test function conversion system of MMIS according to the present invention;
FIG.17 is a schematic view of the MMOS and the clamp system of the mechanical adaptor in a compressed state;
FIG.18 is a schematic view of the MMOS and the clamp system of the mechanical adaptor in an uncompressed state;
FIG.19 is a detailed structural schematic view of the MMOS and the clamp system of the mechanical adaptor according to the present invention, in which the workbench is not shown;
FIG.20 is a schematic view of the MMIS and the clamp system of the mechanical adaptor in an uncompressed state;
FIG.21 is a detailed structural schematic view of the MMIS and the clamp system of the mechanical adaptor in an uncompressed state;
FIG.22 is a detailed structural schematic view of the MMIS and the clamp system of the mechanical adaptor in a compressed state;
FIG.23 is a schematic view of the flexible mechanism according to the present invention; and
FIG.24 is a detailed structural schematic view of the flexible mechanism according to the present invention.

In which:

| | |
|---|---|
| 1:workbench; | 2:mechanical adaptor; |
| 3:measurement module on the input side (MMIS); | |
| 4:three-dimensional movement system; | |
| 5: information processing module; | |
| 6:measurement module on the output side (MMOS); | |
| 7:pillar; | 8: vertical-direction-movement system; |
| 9: rack for connecting with MMIS; | 10:rotary table system; |

| | |
|---|---|
| 11: rotary table mounting rack; | 12: vertical guide rail mounting rack; |
| 13: horizontal-direction-movement system; | 14: rotating hydraulic cylinder; |
| 15: MMIS sensors system | 16: MMIS test function conversion system; |
| 17: MMIS drive system; | 18: servo motor; |
| 19: first upper end flange of MMIS; | 20: first coupling; |
| 21: MMIS cylinder; | 22: high-precision shaft; |
| 23: first mounting rack; | 24,30: first readhead; |
| 25: first sleeve; | 26:first fixing rack; |
| 27: first torque transducer stator; | 28: first torque transducer rotor; |
| 29: first ring; | 31: first mounting rack; |
| 32: first lower end flange of MMIS; | 33: bearingset; |
| 34: MMOS drive system; | 35: second lower end flange of MMOS |
| 36: MMOS test function conversion system; | |
| 37: MMOS sensors system; | 38: MMOS cylinder; |
| 39: loading motor; | 40: loading motor output shaft; |
| 41: second coupling; | 42: first sleeve; |
| 43:gearbox; | 44: gear train; |
| 45: second sleeve for torque transducer mounting; | |
| 46: second fixing rack; | 47: second torque transducer rotor; |
| 48: second sleeve; | 49, 55: second mounting rack; |
| 50, 54: second readhead; | 51: spindle; |
| 52: second upper end flange of MMOS; | 53: second ring; |
| 56: retainer; | 57: second torque transducer stator; |
| 58: adaptor housing; | 59: first connecting shaft; |
| 60: tested reducer; | 61: second connecting shaft; |
| 62,66: first hydraulic cylinder in MMOS; | 63, 65: first Ω-shape rack; |
| 64: MMOS output shaft; | |
| 67: first mounting rack of the first displacement sensor; | |
| 68: first displacement sensor in MMOS; | |
| 69: MMOS input shaft; | 70: first brake sleeve in MMOS; |

| | |
|---|---|
| 71,76: hydraulic cylinder support; | 72: MMOS movable outer sleeve; |
| 73: MMOS bearing; | 74: second steel ball; |
| 75: third spring; | 77: MMOS movable splined sleeve; |
| 78: first piston rod in MMOS; | 79: MMOS ball plunger; |
| 80: fourth spring; | 81,98: first spring; |
| 82, 96: first U-shape rack; | 83: screw; |
| 84: second brake sleeve in MMIS; | 85,94: second hydraulic cylinder of MMIS; |
| 86: MMIS movable outer sleeve; | 87: MMIS bearing; |
| 88: MMIS upper end cover of test function conversion system; | |
| 89: second spring; | 90: MMIS input shaft; |
| 91: second displacement sensor in MMIS; | |
| 92: second mounting rack of the second displacement sensor; | |
| 93: MMIS movable splined sleeve; | 95: screw; |
| 97,103: MMIS ball plunger; | 99,102: second Ω-shape rack; |
| 100: MMIS output shaft; | 101: first steel ball; |
| 104: third hydraulic cylinder in clamp system; | |
| 105: second piston rod of the third hydraulic cylinder in clamp system; | |
| 106: third hinge column; | 107: pressing plate; |
| 108: second hinge column; | 109: central column; |
| 110: roller; | 111: connecting rod; |
| 112: base; | 113: base plate; |
| 114: first hinge column; | 115: upper end eversion flange; |
| 116: compressing plate; | 117: third piston rod of rotating hydraulic cylinder; |
| 118: flexible mechanism; | 119: nut; |
| 120: bolt; | 121: first retaining ring; |
| 122: fifth spring; | 123: sixth spring; |
| 124: second retaining ring | |

### DETAILED DESCRIPTION OF THE PRESENT INVENTION

To make the objectives, technical solutions and advantages of the present invention clearer, the present invention will be described in detail below with reference to the accompanying drawings by embodiments.

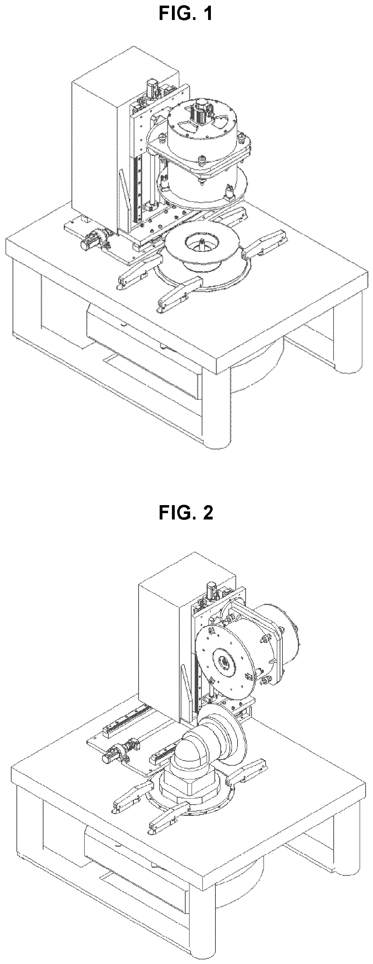

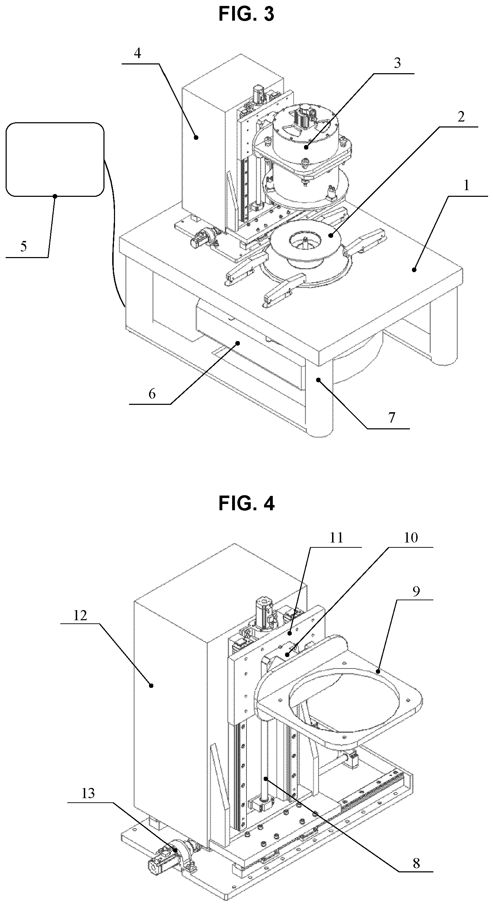

As shown in FIGs.1-24, a comprehensive performance measurement instrument of high precision reducer for industrial robot, comprising:
a workbench 1, a three-dimensional movement system 4, a measurement module on the input side (hereinafter referred to as MMIS) 3, a measurement module on the output side (hereinafter referred to as MMOS) 6, a mechanical adaptor 2 and an information processing module 5; wherein, during measurement, the MMIS 3 and the upper end eversion flange of the mechanical adaptor 2 are coaxially arranged, the MMOS 6 and the lower end eversion flange of the mechanical adaptor 2 are coaxially arranged, the overall structure of the measurement instrument of the present invention is a vertical structure.

The workbench 1 is used as test benchmark for the measurement instrument, which may be supported by a box structure, a truss structure, a pillar 7 or the like. This embodiment adopts the pillar 7 for support.

The three-dimension in the three-dimensional movement system 4 refers to vertical, horizontal, and rotary. The three-dimensional movement system 4 includes a horizontal-direction-movement system 13, a vertical-direction-movement system 8, a vertical guide rail mounting rack 12, a rack 9for connecting with MMIS, a rotary table system 10 and a rotary table mounting rack 11. The horizontal-direction-movement system 13 is fixedly arranged on the workbench 1. The vertical-direction-movement system 8 is fixedly arranged on the vertical guide rail mounting rack 12, the vertical guide rail mounting rack 12 is connected to the horizontal-direction-movement system 13 and is capable of moving in the horizontal direction along the horizontal-direction-movement system 13. The rotary table system 10 is fixed on the rotary table mounting rack 11, the rotary table mounting rack 11 is connected to the vertical-direction-movement system 8 and is capable of moving in the vertical direction along the vertical-direction-movement system 8. The horizontal-direction-movement system 13, the vertical-direction-movement system 8 and the rotary table system 10 are communicated with the information processing module 5, respectively, and receive the instruction signals to drive by the information processing module 5. The rack 9 for connecting with MMIS is used to connect the MMIS 3 and the three-dimensional movement system 4, the rack 9 is connected to the rotary table system 10, and is capable of rotating with the rotary table system 10 in the plane where the horizontal plane and the vertical plane intersect.

The MMIS 3 is used for performing angular measurement and torque measurement of an input end of a tested reducer, and dynamic and static test functions transformation of the tested reducer 60 under different parameters, and providing loading power for a measurement instrument. Wherein, the different parameters are all the parameters currently involved in the measurement of the reducer, such parameters can be summarized as dynamic and static test. The dynamic/static test function conversion is achieved by the separation, transmission and braking functions of shafting of the MMIS/MMOS. The measurement shafting of MMIS is a collective name of all shafts in MMIS 3, including a MMIS input shaft 90, a MMIS output shaft 100, a high-precision shaft 22. The overall structure of the MMIS 3 is barrel-shaped, and is fixedly connected to the three-dimensional movement system 4. The MMIS is fixedly connected to the three-dimensional movement system 4, and is driven by the three-dimensional movement system 4 to realize movement along horizontal and vertical directions, as well as rotation in the plane where the horizontal plane and the vertical plane intersect.

Wherein, the MMIS 3 comprises a MMIS drive system 17, a MMIS test function conversion system 16, a MMIS sensors system 15 and a MMIS cylinder 21.

The MMIS drive system 17 includes a servo motor 18 and a first upper end flange 19; the servo motor 18 includes an absolute type encoder, which housing is fixed on the first upper end flange 19 so as to control the speed, position and torque in the measurement shafting of MMIS, and finally acting on the high-precision shaft 22. The first upper end flange 19 is fixed on the upper end face of the MMIS cylinder 21.

The MMIS test function conversion system 16 is used to perform separation, transmission and braking functions of the measurement shafting of the MMIS, so that the conversion of the dynamic and static test functions of the tested reducer 60 can be realized; the MMIS test function conversion system 16, which is arranged inside the MMIS cylinder 21, comprises an execution module, a detection module, a driving module, a braking and fixing module and a shafting module.

The execution module of the MMIS test function conversion system includes a MMIS movable outer sleeve 86, a MMIS bearing 87 and a MMIS movable splined sleeve 93; an inner ring of the MMIS bearing 87 is connected with the MMIS movable splined sleeve 93, and the outer ring is connected with the MMIS movable outer sleeve 86; the MMIS movable outer sleeve 86 is a bearing support connecting with the outer ring of the MMIS bearing 87; The MMIS bearing 87 is an aligning bearing, which serves as a flexible connection that drives the axial displacement of the MMIS movable outer sleeve 86 and does not affect the rotation of the MMIS movable splined sleeve 93. After the MMIS movable outer sleeve 86 moves, it works with the MMIS bearing 87 can self-adapt the angular deviation between the MMIS movable outer sleeve 86 and the MMIS movable splined sleeve 93 caused by asynchronous operation of the second hydraulic cylinders 85, 94, thus ensuring the smooth sliding between the MMIS movable splined sleeve 93 and the MMIS input shaft 90. There is an interference fit between the MMIS movable splined sleeve 93 and the inner ring of the MMIS bearing 87; the interior of the MMIS movable splined sleeve 93 is provided with an internal spline which is capable of connecting with an external spline of the MMIS input shaft 90 and an external spline of the MMIS output shaft 100; and the exterior of the MMIS movable splined sleeve 93 is provided with an external spline which is capable of connecting with an internal spline of a second brake sleeve 84. The internal spline of the MMIS movable splined sleeve 93 connects with the external splines of the MMIS input shaft 90 and the output end of the MMIS 3 along the preset position in axial position, so that the connection of the MMIS output shaft 100 and MMIS input shaft 90 can be realized. Wherein, the preset position in axial position is the position where the MMIS movable splined sleeve 93 located when a first steel ball 101 is embedded into a second first V-shape annular groove arranged on the MMIS input shaft 90. The internal spline of the MMIS movable splined sleeve 93 connects with the external spline of the MMIS output shaft 100 along the preset position in axial position, and the external spline of the MMIS movable splined sleeve 93 connects with the internal spline of the second brake sleeve 84 along the preset position in axial position, so that a braking of the measurement shafting can be realized, that is, realizing the braking of the input end of the tested reducer 60 simultaneously. Wherein, the preset position in axial position is the position where the MMIS movable splined sleeve 93 located when a first steel ball 101 is embedded into a third first V-shape annular groove arranged on the MMIS input shaft 90. The internal spline of the MMIS movable splined sleeve 93 only connects with the external splines of the MMIS input shaft 90 along the preset position in axial position, so that the input end of the tested reducer 60 is in a free state. Wherein, the preset position in axial position is the position where the MMIS movable splined sleeve 93 located when a first steel ball 101 is embedded into a first first V-shape annular groove arranged on the MMIS input shaft 90.

The detection module of the MMIS test function conversion system uses a second displacement sensor 91 in MMIS to detect the position of the execution module, and determines whether the MMIS movable splined sleeve 93 reaches the preset position in axial position. The second displacement sensor 91 is fixed on the MMIS upper end cover 88 of test function conversion system via the second mounting rack.

The driving module of the MMIS test function conversion system includes two driving sub modules which are symmetrically placed along the radial direction of shafting. Each of the driving sub module comprise a second hydraulic cylinder 85 of MMIS, a second Ω-shape rack 102 and a first U-shape rack 82; one end of the first U-shape rack 82 is screwed on the piston rod of the second hydraulic cylinder 85 by a screw 83, while the other end is screwed with a MMIS ball plunger 103, the ballhead of the MMIS ball plunger 103 is placed opposite to the screw 83 on the piston rod of the second hydraulic cylinder 85; an intermediate crossbeam between the second Ω-shape racks 99,102, where a hole is arranged in the center position of the intermediate crossbeam, is positioned between the U-shape opening of the first U-shape rack 82, the top end of the hole on the intermediate crossbeam is in contact with the ballhead of the MMIS ball plunger 103 with a first spring 81 pressed therebetween. One end of the first spring 81 is fixed on the hole of the intermediate crossbeam, and the other end is fixed on the MMIS ball plunger 103, so that the second Ω-shape rack 102 is flexible connected to the first U-shape rack 82. The bottom side of the second Ω-shape rack 102 is connected to the eversion flange of the MMIS movable outer sleeve 86. Similarly, the other driving sub module comprises a second hydraulic cylinder 94 of MMIS, a second Ω-shape rack 99 and a first U-shape rack 96; one end of the first U-shape rack 96 is screwed on the piston rod of the second hydraulic cylinder 94 by the screw 95, while the other end is screwed with a MMIS ball plunger 97, a first spring 98 is pressed between an intermediate crossbeam of the second Ω-shape rack 99 and the MMIS ball plunger 97, and the second Ω-shape rack 99 is flexible connected to the first U-shape rack 96 via the first spring 98. The bottom side of the second Ω-shape rack 102 is connected to the eversion flange of the MMIS movable outer sleeve 86. The movement of the piston rods of the second hydraulic cylinders 85,94 drive the second Ω-shape racks 99,102 to move, thereby driving the execution module to move. During movement, a ball passing through the top of the MMIS ball plungers 97,103 reduces additional friction due to inclination caused by asynchronous operation of second hydraulic cylinders 85,94. By deformation of the first springs 81,98, an inclination between the second Ω-shape rack102/99 and the first U-shape rack 82/96 can be flexible controlled.

The braking and fixing module of the MMIS test function conversion system includes a second brake sleeve 84 in MMIS and a MMIS upper end cover of the test function conversion system 88; the central portion of the second brake sleeve 84 is provided with an internal spline which is capable of connecting with an external spline of the MMIS movable splined sleeve 93; the second brake sleeve 84 is fixed on the MMIS upper end cover 88 of test function conversion system, and the MMIS upper end cover 88 is fixed on the inner wall of the MMIS cylinder 21.

The shafting module of the test function conversion system of MMIS includes a MMIS input shaft 90 and a MMIS output shaft 100 being coaxially arranged with each other; one end of the MMIS input shaft 90 is connected to an output shaft of the servo motor 18 via a first coupling 20, while the other end penetrates the center of the MMIS upper end cover 88 of test function conversion system and extends into the second brake sleeve 84 in MMIS, and the other end of the input shaft is opposite to the MMIS output shaft 100; one end of the MMIS output shaft 100 is connected to a first torque transducer rotor 28 of the MMIS sensors system 15, while the other end is opposite to the MMIS input shaft 90; a gap is provided between the opposing MMIS input shaft 90 and the MMIS output shaft 100, and both the opposing input shaft and the output shaft are not contacted to each other and provided with an external spline connecting with the internal spline of the MMIS movable splined sleeve 93, a central internal spline of the second brake sleeve 84 is arranged at the junction of the MMIS input shaft 90 and the MMIS output shaft 100, that is, the junction is the opposing position of the MMIS input shaft 90 and the MMIS output shaft 100, the specific position can be determined by the size of the MMIS movable splined sleeve 93 as long as the internal spline of the second brake sleeve 84 can be connected with the external spline of the MMIS movable splined sleeve 93; and the MMIS movable splined sleeve 93 is sleeved outside the MMIS input shaft 90, through the movement of the execution module, the MMIS movable splined sleeve 93 realizes three operating types of only connecting with the MMIS input shaft 90, connecting with the MMIS input shaft 90 and the MMIS output shaft 100, and connecting with the MMIS input shaft 90 and the second brake sleeve 84 in MMIS. When in the last operating type, the MMIS movable splined sleeve 93 can be connected with the MMIS input shaft 90 or not.

Wherein, the MMIS test function conversion system 16 also comprises a mechanical auxiliary positioning instrument, including a second spring 89, a first steel ball 101 and three first V-shape annular grooves; the second spring 89 and the first steel ball 101 are embedded in the connecting part of the MMIS movable splined sleeve 93 and a shaft hole of the MMIS input shaft 90 ; three first V-shape annular grooves are slotted on the MMIS input shaft 90 along the circumferential direction of the MMIS input shaft 90, which are divided into a first first V-shape annular groove, a second first V-shape annular groove and a third first V-shape annular groove from the input end to the output end of the MMIS 3; the first first V-shape annular groove is located at the position of the first steel ball 101 and the second spring 89 when the internal spline of the MMIS movable splined sleeve 93 only connecting with the external spline of the MMIS input shaft 90 and not connecting with the MMIS output shaft 100, and the external spline of the MMIS movable splined sleeve 93 is not connected with the internal spline of the second brake sleeve 84, that is in a free state; the second first V-shape annular groove is located at the position of first steel ball 101 and the second spring 89 when the internal spline of the MMIS movable splined sleeve 93 connecting with the external splines of the MMIS input shaft 90 and the MMIS output shaft 100, and the external spline of the movable splined sleeve is not connected with the internal spline of the second brake sleeve 84, that is in a free state; the third first V-shape annular groove is located at the position of first steel ball 101 and the second spring 89 when the internal spline of the MMIS movable splined sleeve 93 connecting with the external spline of the MMIS output shaft 100, and the external spline of the movable splined sleeve 93 connecting with the internal spline of the second brake sleeve 84, and the MMIS movable splined sleeve 93 can be connected with the MMIS input shaft 90 or not. The first steel ball 101 contacts with different first V-shape annular grooves under the effort of the second spring 89, and the positions thereof respectively represent the positioning status of the separation, transmission and braking functions. The servo motor 18 of the MMIS drive system 17 controls the displacement so that the phase alignment of the internal spline of the MMIS movable splined sleeve 93 and the external spline of the MMIS output shaft 100 and the phase alignment of the external spline of the MMIS movable splined sleeve 93 and the central internal spline of the second brake sleeve 84 can be achieved.

The second displacement sensor 91 in the detection module and the second hydraulic cylinders 85,94 in the driving module of the MMIS test function conversion system are communicated with the information processing module 5 , respectively; and the information processing module 5 receives data from the second displacement sensor 91 and then sends an instruction signal to the second hydraulic cylinders 85,94.

The MMIS sensors system 15 is arranged inside the MMIS cylinder 21, including a torque measurement system of MMIS, an angular measurement system of MMIS, a high-precision shaft 22, bearingset 33 and a first lower end flange 32 of MMIS.

The torque measurement system comprises a first torque transducer, a first fixing rack 26 and a first sleeve 25; the first torque transducer includes a first torque transducer rotor 28 and a first torque transducer stator 27 in a separated state; one end of the first torque transducer stator 28 is connected to the MMIS output shaft 100, and the other end is connected to the high-precision shaft 22; the first torque transducer stator 27 is fixed on the first fixing rack 26 and is connected to the information processing module 5 for transmitting data, the first fixing rack 26 is fixed on the first sleeve 25 which is fixed on the first lower end flange 32.

The angular measurement system includes a first ring 29 and two first readheads 24,30 symmetrically placed along the radial direction of shafting, a first mounting rack 23 opposing to the first readhead 24, a first mounting rack 31 opposing to the first readhead 30, each of the first readheads 24,30 is connected to the information processing module 5 for transmitting data, the first ring 29 is fixedly connected to the high-precision shaft 22 and rotates therewith; the first mounting racks 23,31 are fixed on the first lower end flange 32, respectively.

The connecting end face of the high-precision shaft 22 and the mechanical adaptor 2 is provided with the internal spline which is connected with the external spline of the second connecting shaft 61, the high-precision shaft 22 is connected with the inner ring of the bearingset 33, while the outer ring of the bearingset 33 is connected with the central hole of the first lower end flange 32 of MMIS. The bearingset 33 comprises two individual bearings arranged on the same support, and can simultaneously adjust the clearance of the two individual bearings arranged on the same support so as to ensure the rotation precision of the angular measurement system of MMIS.

The first lower end flange 32 is fixed on the lower end of the MMIS cylinder 21.

The MMOS 6 is used for performing angular measurement and torque measurement of an input end of a tested reducer 60, and dynamic and static test functions transformation of the tested reducer under different parameters, and providing loading turque for a measurement instrument. Wherein, the different parameters are all the parameters currently involved in the measurement of the reducer, such parameters can be summarized as dynamic and static test. The dynamic/static test function conversion is achieved by the separation, transmission and braking functions of shafting of the MMIS/MMOS. The measurement shafting of MMOS is a collective name of all shafts in MMOS 6, including a MMOS input shaft 69, a MMOS output shaft 64, a spindle 51 of the dense ball bearing system. The MMOS 6 is suspended on the workbench 1 and extended downwardly from the workbench 1.

Wherein the MMOS 6 comprises a MMOS drive system 34, a MMOS test function conversion system 36, a MMOS sensors system 37, a MMOS cylinder 38 and a MMOS second lower end flange 35.

The MMOS drive system 34 comprises a loading motor 39 and a gear system; the loading motor 39 is a torque motor comprising an absolute type encoder, which provides high-speed and low-torque and can control the speed, position and torque in the measurement shafting of MMOS; the gear system, comprising a gear box 43 and a gear train 44, is used for converting a high-speed low-torque provided by the loading motor 39 to a low-speed high-torque, and the final output of the gear train 44 achieves speed reduction and torque amplification. A loading motor output shaft 40 of the loading motor 39 is connected to an input shaft of the gear train 44 via the second coupling 41; a housing of the loading motor 39 is fixed on the gear box 43 via a first sleeve 42; and the output shaft of the gear train 44 is the MMOS input shaft 69; the gear box 43 is fixed on the MMOS second lower end flange 35.

The MMOS test function conversion system 36 is used to realize the separation, transmission and braking functions of the measurement shafting in MMOS so as to realize the conversion of different test functions of the tested reducer 60. The MMOS test function conversion system 36 is arranged inside the MMOS cylinder 38, comprising an execution module, a detection module, a braking and fixing module and a shafting module in MMOS.

The execution module comprises a MMOS movable outer sleeve 72, a MMOS bearing 73 and a MMOS movable splined sleeve 77; the inner ring of the MMOS bearing 73 is connected with the MMOS movable splined sleeve 77, and the outer ring is connected with the MMOS movable outer sleeve 72; the MMOS movable outer sleeve 72 is the bearing support connecting with the inner ring of the MMOS bearing 73; the MMOS bearing 73 is an aligning bearing, which serves as a flexible connection that drives the axial displacement of the movable outer sleeve 72 and does not affect the rotation of the MMOS movable splined sleeve 77. After the MMOS movable outer sleeve 72 moves, it works with the MMOS bearing 73 can self-adapt the angular deviation between the MMOS movable outer sleeve 72 and the MMOS movable splined sleeve 77 caused by asynchronous operation of the second hydraulic cylinders 62,66 in MMOS, thus ensuring the smooth sliding between the MMOS movable splined sleeve 77 and the MMOS input shaft 69. There is an interference fit between the MMOS movable splined sleeve 77 and the inner ring of the MMOS bearing 73; the interior of the MMOS movable splined sleeve 77 is provided with an internal spline which is capable of connecting with an external spline of the MMOS input shaft 69 and an external spline of the MMOS output shaft 64; and the exterior of the MMOS movable splined sleeve 77 is provided with an external spline which is capable of connecting with an internal spline of a first brake sleeve 70 in MMOS. The internal spline of the MMOS movable splined sleeve 77 connects with the external splines of the MMOS input shaft 69 and the output end of the MMOS 6 along the preset position in axial position, so that the connection of the MMOS input shaft 69 and MMOS output shaft 64 can be realized. Wherein, the preset position in axial position is the position where the MMOS movable splined sleeve 77 located when a second steel ball 74 is embedded into a second second V-shape annular groove arranged on the MMOS input shaft 69. The internal spline of the MMOS movable splined sleeve 77 connects with the external spline of the MMOS output shaft 69 along the preset position in axial position, and the external spline of the MMOS movable splined sleeve 77 connects with the internal spline of the first brake sleeve 70 along the preset position in axial position, so that a braking of the measurement shafting in MMOS can be realized, that is, realizing the braking of the output end of the tested reducer 60 simultaneously. Wherein, the preset position in axial position is the position where the MMOS movable splined sleeve 77 located when a second steel ball 74 is embedded into a third second V-shape annular groove arranged on the MMOS input shaft 64. The internal spline of the MMOS movable splined sleeve 77 only connects with the external splines of the MMOS input shaft 69 along the preset position in axial position, so that the output end of the tested reducer 60 is in a free state. Wherein, the preset position in axial position is the position where the MMOS movable splined sleeve 77 located when a second steel ball 74 is embedded into a first second V-shape annular groove arranged on the MMOS input shaft 74.

The detection module of the MMOS test function conversion system uses a first displacement sensor 68 in MMOS to detect the position of the execution module, and determines whether the MMOS movable splined sleeve 77 reaches the preset position in axial position. The first displacement sensor 68 is fixed on the MMOS second lower end flange 35 via a first mounting rack 67 of the first displacement sensor.

The driving module of the test function conversion system of MMOS includes two driving sub modules which are symmetrically placed along the radial direction of shafting. Each of the driving sub module comprise a first hydraulic cylinder 62 in MMOS, and a first Ω-shape rack 63, a first hydraulic cylinder 66 in MMOS, and a first Ω-shape rack 65; the first hydraulic cylinders 62,66 are fixed on the second lower end flange 35 of MMOS via hydraulic cylinder supports 71, 76, respectively; a MMOS ball plunger 79 is screwed on the top of the piston rod of each of the first hydraulic cylinders 62,66; a hole is arranged in the center position of an intermediate crossbeam between the first Ω-shape racks 63,65; the top end of the hole on the intermediate crossbeam is in contact with the ballhead of the MMOS ball plunger 79 with a fourth spring 80 pressed therebetween. One end of the fourth spring 80 is fixed on the hole of the intermediate crossbeam between the first Ω-shape racks 63,65, and the other end is fixed on the MMOS ball plunger 79, so that the first hydraulic cylinder 62 is flexible connected to the first Ω-shape rack 63, and the first hydraulic cylinder 66 is flexible connected to the first Ω-shape rack 65. The bottom sides of the first Ω-shape racks 63,65 are connected to the eversion flange of the MMOS movable outer sleeve 72. The movement of the piston rods of the first hydraulic cylinders 62,66 drive the first Ω-shape racks 63,65 to move, thereby driving the execution module to move. During movement, a ball passing through the top of the MMOS ball plunger 79 reduces additional friction due to inclination caused by asynchronous operation of first hydraulic cylinders 62,66. By deformation of the fourth spring 80, a tiny inclination between the first Ω-shape racks 63,65 and the first hydraulic cylinders 62,66 can be flexible controlled.

The braking and fixing module of the test function conversion system of MMOS includes a first brake sleeve 70 in MMOS which fixed on the inner wall of the MMOS cylinder 38; the central portion of the first brake sleeve 70 is provided with an internal spline which is capable of connecting with an external spline of the MMOS movable splined sleeve 77. A long-hole slot, slotted on the first brake sleeve 70, is located at the driving sub modules of the driving module for passing through the first Ω-shape racks 63,65.

The shafting module of the MMOS test function conversion system includes a MMOS input shaft 69 and a MMOS output shaft 64 being coaxially arranged with each other; the MMOS input shaft 69 is the output shaft of the gear train 44, and one end of the MMOS input shaft 69 penetrates the center of the second lower end flange 35 of MMOS and is opposite to the MMOS output shaft 64; one end of the output shaft 64 is connected to the second torque transducer rotor 47 of the MMOS sensors system 37, while the other end is opposite to the MMOS input shaft 69; a gap is provided between the opposing input shaft 69 and the output shaft 64, and both the opposing input shaft and the output shaft are not contacted with each other and provided with an external spline connecting with the internal spline of the MMOS movable splined sleeve 77, a central internal spline of the first brake sleeve 70 is arranged at the junction of the MMOS input shaft 69 and the MMOS output shaft 64, that is, the junction is the opposing position of the MMOS input shaft 69 and the MMOS output shaft 64, the specific position can be determined by the size of the MMOS movable splined sleeve 77 as long as the internal spline of the first brake sleeve 70 can be connected with the external spline of the MMOS movable splined sleeve 77; and the MMOS movable splined sleeve 77 is sleeved outside the MMOS input shaft 69, through the movement of the execution module, the movable splined sleeve realizes three operating types of only connecting with the input shaft 69, connecting with the input shaft 69 and the output shaft 64, and connecting with the output shaft 64 and the first brake sleeve 70 in MMOS. When in the last operating type, the MMOS movable splined sleeve 77 can be connected with the MMOS input shaft 69 or not.

Further, the MMOS test function conversion system 36 also comprises a mechanical auxiliary positioning instrument, including a third spring 75, a second steel ball 74 and three second V-shape annular grooves; the third spring 75 and the second steel ball 74 are embedded in the connecting part of the movable splined sleeve 77 and a shaft hole of the MMOS input shaft 69; three second V-shape annular grooves are slotted on the MMOS input shaft 69 along the circumferential direction of the MMOS input shaft 69, which are divided into a first second V-shape annular groove, a second second V-shape annular groove and a third second V-shape annular groove from the input end to the output end of the MMOS 6; the first second V-shape annular groove is located at the position of the second steel ball 74 and the third spring 75 when the internal spline of the MMOS movable splined sleeve 77 only connecting with the external spline of the MMOS input shaft 69 and not connecting with the external spline of the MMOS output shaft 64, and the external spline of the MMOS movable splined sleeve 77 is not connected with the internal spline of the first brake sleeve 70, that is in a free state; the second second V-shape annular groove is located at the position of second steel ball 74 and the third spring 75 when the internal spline of the MMOS movable splined sleeve 77 connecting with the external splines of the MMOS input shaft 69 and the MMOS output shaft 64, and the external spline of the movable splined sleeve 77 is not connected with the internal spline of the first brake sleeve 70, that is in a free state; the third second V-shape annular groove is located at the position of second steel ball 74 and the third spring 75 when the internal spline of the MMOS movable splined sleeve 77 connecting with the external spline of the MMOS output shaft 64, and the external spline of the movable splined sleeve 77 connecting with the internal spline of the first brake sleeve 70, and the MMOS movable splined sleeve 77 can be connected with the MMOS input shaft 69 or not. The second steel ball 74 contacts with different second V-shape annular grooves under the effort of the third spring 75, and the positions thereof respectively represent the positioning status of the separation, transmission and braking functions. The loading motor 39 of the MMOS drive system 34 controls the displacement so that the phase alignment of the internal spline of the MMOS movable splined sleeve 77 and the external spline of the MMOS output shaft 64 and the phase alignment of the external spline of the MMOS movable splined sleeve 77 and the central internal spline of the first brake sleeve 70 can be achieved.

The first displacement sensor 68 in the detection module and the first hydraulic cylinders 62,66 in the driving module of the test function conversion system of MMOS are communicated with the information processing module 5, respectively; and the information processing module 5 receives data from the first displacement sensor 68 and then sends an instruction signal to the first hydraulic cylinders 62,66.

The MMOS sensors system 37 is arranged inside the MMOS cylinder 38, including a torque measurement system of MMOS, an angular measurement system of MMOS, a dense ball bearing system and a second upper end flange 52 of MMOS.

The torque measurement system comprises a second torque transducer, a second fixing rack 46 and a second sleeve 45 for torque transducer mounting. The second torque transducer includes a second torque transducer rotor 47 and a second torque transducer stator 57 in a separated state; one end of the second torque transducer rotor 47 is connected to the MMOS output shaft 64, and the other end is connected to the spindle 51 of the dense ball bearing system; the second torque transducer stator 57 is fixed on the second fixing rack 46 and is connected to the information processing module 5 for transmitting data. The second fixing rack 46 is fixed on the second sleeve 45 which is fixed on the second sleeve 48 of the dense ball bearing system.

The angular measurement system includes a second ring 53 and two second readheads 50,54 symmetrically placed along the radial direction of shafting, a second mounting rack 49 opposing to the second readhead 50, and a second mounting rack 55 opposing to the second readhead 54; each of the second readheads 50,54 is connected to the information processing module 5 for transmitting data, the second ring 53 is fixedly connected to the spline 51 of the dense ball bearing system and rotates therewith. The second readheads 50,54 are fixed on the second sleeve 48 of the dense ball bearing system via second mounting racks 49,55, respectively.

The dense ball bearing system acting as a transmission part comprises a spindle 51, a second sleeve 48 and balls that are densely connected with an interference fit between the spindle 51 and the second sleeve 48; the spindle 51 acts as a transmission part, the connecting end face of the spindle 51 and the mechanical adaptor 2 is provided with an external involute spline which is coupled with the internal spline of the first connecting shaft 59 with MMOS; the second sleeve 48 is fixed on the inner wall of the MMOS cylinder 38, and the balls are positioned via a retainer 56 which is located between the spindle 51 and the second sleeve 48. The dense ball bearing system has high rotation accuracy, thus ensuring the accuracy of the angular measurement system in MMOS.

The second upper end flange 52 of MMOS is fixed on the upper end face of the MMOS cylinder 38.

Further, the mechanical adaptor 2, used for fixing the tested reducer 60, has a standard structure to connect to the measurement instrument. Wherein, the mechanical adaptor 2 comprises a tested reducer 60, a second connecting shaft 61 used for connecting with MMIS, a first connecting shaft 59 used for connecting with MMOS and an adaptor housing 58; one end of the second connecting shaft 61 is fixed on an input end of the tested reducer 60, while the other end is provided with an external spline connecting with an internal spline of the high-precision shaft 22 in MMIS 3; one end of the first connecting shaft 59 is fixed on an output end of the tested reducer 60, while the other end is provided with an external spline connecting with an internal spline of the spindle 51 of the dense ball bearing system in MMOS 6; a eversion flange is provided on each side of the adaptor housing 58, one eversion flange drives a compressing plate 116 via a plurality of rotating hydraulic cylinders 14 to press and fix on the MMIS 3, and the other eversion flange is fixed to the MMOS via a four-bar clamp system. The structure of the mechanical adaptor 2 is determined according to the structure of the tested reducer 60.

Wherein, a plurality of rotating hydraulic cylinders 14 are fixed and arranged along the circumferential direction of the first lower end flange 32 of MMIS; each of the rotating hydraulic cylinders 14 include a third piston rod 117 of rotating hydraulic cylinder and the compressing plate 116, the compressing plate 116 is in the shape of an oblong hole, an ellipse, or a rectangle, and the center of the compressing plate 116 is fixed on the top end of the third piston rod 117, and can rotate with the rotation of the third piston rod 117. By changing the oil inlets and outlets of the rotating hydraulic cylinders 14, the third piston rod 117 can rotate circumferentially instead of displace axially so as to rotate the compressing plate 116. When the compressing plate 116 is not in contact with the upper end eversion flange 115 of the adaptor housing 58, it is an uncompressed state; when the compressing plate 116 rotates with the rotation of the third piston rod 117 so as to contact the upper end eversion flange 115, it is a compressing state. Wherein, the distance between the compressing plate 116 and the first lower end flange 32 of MMIS equals to the thickness of the upper end eversion flange 115 of the adaptor housing 58. The rotating hydraulic cylinders 14 are communicated with the information processing module 5 for transmitting oil inlet and oil outlet instructions.

Wherein, a plurality of four-bar clamp system are provided in the present invention, each of the four-bar clamp system comprise a third hydraulic cylinder 104 in clamp system, a second piston rod 105 of the third hydraulic cylinder in clamp system, a pressing plate 107, a connecting rod 111, a base 112 and a base plate 113; the end face of the third hydraulic cylinder 104 and the base plate 113are fixed on the workbench 1; the base 112 is fixed on the base plate 113, one end of the connecting rod 111 is hinged on the base plate 113 via the connection between the first hinge column 114 and the base 112, and the other end of the connecting rod 111 is connected to the middle part of the pressing plate 107 through a second hinge column 108; one end of the pressure plate 107 is connected to the end of the second piston rod 105 of the third hydraulic cylinder through a third hinge column 106, and the other end is connected with a roller 110 via a central column 109. By changing the oil inlets and outlets of the third hydraulic cylinder 104 in clamp system, the expansion and contraction of the second piston rod 105 can be realized, and the pressing plate 107 connected with the second piston rod 105 moves back and forth simultaneously; the third hydraulic cylinder 104 is communicated with the information processing module 5 for transmitting oil inlet and oil outlet instructions.

Further, the connection part between the MMIS 3 and the three-dimensional movement system 4 is arranged with a flexible mechanism 118 for automatic converting the displacement datum of the guide rail in MMIS and the measurement datum. Wherein, the flexible mechanism 118 is used for the flexible connection between the rack 9 for connecting with MMIS in the three-dimensional displacement system 4 and the flange of the MMIS cylinder. A plurality of flexible mechanisms 118 are provided in the present invention, and are circumferentially arranged along the connection between the MMIS 3 and the three-dimensional displacement system 4. Each of the flexible mechanism 118 comprise a first retaining ring 121, a second retaining ring 124, a fifth spring 122, a sixth spring 123, a bolt 120 and a nut 119; the rack 9 for connecting with MMIS has same coaxial holes at the same positions around the flange of the MMIS cylinder; the bolts 120 penetrate the coaxial holes and the nuts 119 are screwed to the bottom ends of the bolts 120, respectively; the first retaining ring 121 and the second retaining ring 124, which are connected to the bolts 120, are positioned on both sides of the rack 9 for connecting with MMIS and the flange of the MMIS cylinder, respectively. One end of the first retaining ring 121 is connected to the cap of the bolt 120; and one end of the second retaining ring 124 is connected to the nut 119. The fifth spring 122 and sixth spring 123 are sleeved on the bolts 120; and the fifth spring 122, in a compressed state, is located between the first retaining ring 121 and the rack 9 for connecting with MMIS; and the sixth spring 123, in a compressed state, is located between the second retaining ring 124 and the flange of the MMIS cylinder; the inner diameters of the fifth spring 122 and sixth spring 123 are larger than the outer diameter of the screw thread of the bolt 120.

The information processing module 5 is an industrial integrated test control system, which collects data transmitted by the measurement instrument and sends corresponding command signals. The information processing module 5 is respectively communicated with the following elements: horizontal-direction-movement system 13, vertical-direction-movement system 8 and rotary table system 10 of the three-dimensional movement system 4, second displacement sensor 91, second hydraulic cylinders 85,94, first torque transducer stator 27, first readheads 24,30, the first displacement sensor 68 in MMOS, first hydraulic cylinders 62,66, second torque transducer stator 57, second readheads 50,54 in MMOS 6, the rotating hydraulic cylinder 14 and the third hydraulic cylinder in clamp system 104.

As shown in FIGs. 2-9,17-24, the embodiment discloses a clamping and detaching process of the tested reducer 60 of the comprehensive performance measurement instrument according to the present invention, the detailed process are as follows.

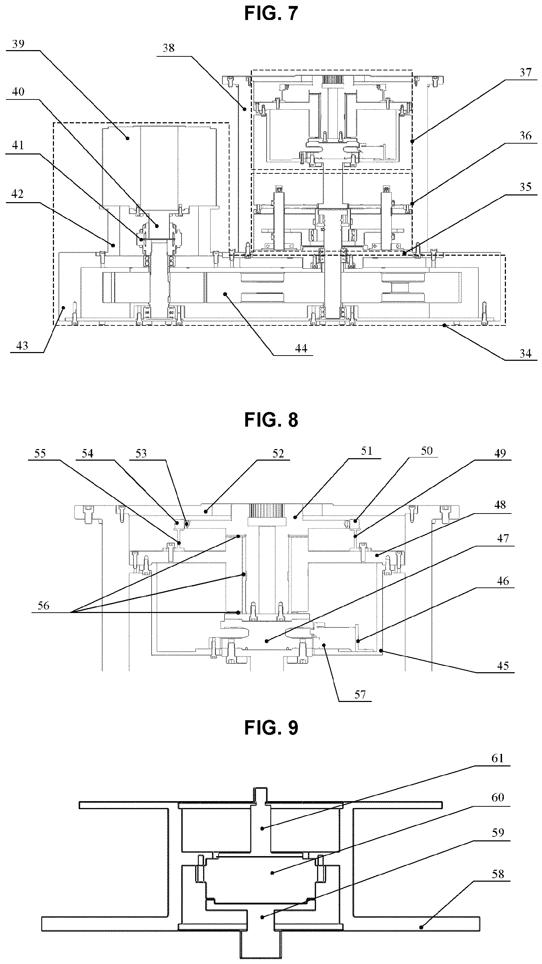

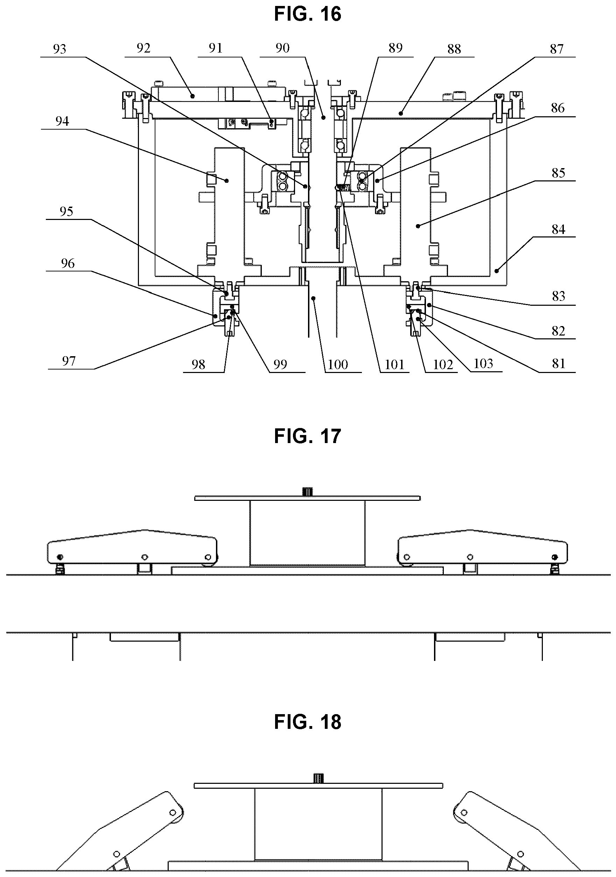

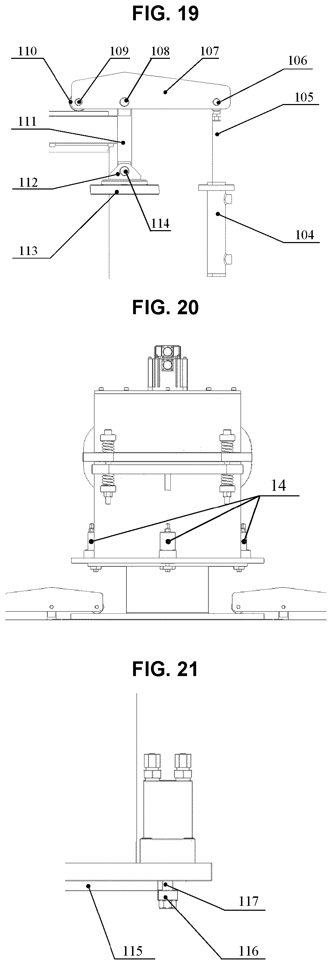

According to the model of the tested reducer 60, it is assembled as shown in FIG. 9. The tested reducer 60 is fixed inside the adaptor housing 58, the input part of the tested reducer 60 is connected to the second connecting shaft 61, and the output part is connected to the first connecting shaft 59, and the connection between the second connecting shaft 61 and the MMIS 3 or the first connecting shaft 59 and the MMOS 6 is a standard mechanical interface. When the mechanical adaptor 2 is not placed on the test position, the state of the four-bar clamp system in MMOS 6 is shown in FIG. 18, that is in an uncompressed state; and the state of the rotating hydraulic cylinder 14 of the MMIS 3 is shown in FIG. 21, that is in an uncompressed state; meanwhile, the MMIS 3 is in a concession state, that is, the MMIS 3 makes room for the installation of the mechanical adaptor 2. After the mechanical adaptor 2 is installed, it is placed on the test position to ensure that the external spline of the first connecting shaft 59 connects with the internal spline of the spindle 51 of the dense ball bearing system in the MMOS 6, and the lower end eversion flange of the adaptor housing 58 and the second upper end flange 52 of MMOS are connected with each other for stop positioning. The MMIS 3 can realize the two-dimensional movement along the vertical and horizontal directions under the drive of the three-dimensional movement system 4, which are performed by the MMIS 3 connecting with the mechanical adaptor 2 via the vertical-direction-movement system 8 and the horizontal-direction-movement system13. The external spline of the second connecting shaft 61 is connected with the internal spline of the high-precision shaft 22 of the MMIS 3, and the upper end eversion flange 115 of the adaptor housing 58 and the first lower end flange 32 of MMIS are connected with each other for stop positioning, the connected state is shown in FIG. 20. If the tested reducer 60 is at a right angle, the MMIS 3 is rotated 90 degrees under the drive of the rotary table system 10, and then connected with the mechanical adaptor 2 via the vertical-direction-movement system 8 and the horizontal-direction-movement system13; the rotation structure of the MMIS under the drive of the rotary table system 10 is shown in FIG. 2.

The MMIS 3 is moved under the drive of the three-dimensional movement system 4 with reference to the guide rail displacement. At this time, the fifth spring 122 and the sixth spring 123 are in a compressed state, respectively, so that the rack 9 for connecting with MMIS of the three-dimensional movement system 4 and the cylinder flange of the MMIS 3 are in a flexible connection state. The MMIS 3 requires moving down gradually during the connecting process between the MMIS 3 and the mechanical adaptor 2, and the compressing force of the fifth spring 122 and the sixth spring 123 are weakened or even in a free state during the compressing state, and finally reaches the desired connecting state. Since springs are adopted in the flexible mechanism 118, the MMIS cylinder 21 has a certain flotation amount relative to the three-dimensional movement system 4, which allows no interference occurred during the connecting process, greatly reduce the accuracy requirements of the movement on the guide rails displacement, so that the MMIS 3 enters flexible conversion based on measurement datum, thus avoiding rigid interference between the movement system and the measurement system in an adaptive manner. And after the MMIS 3 is connected with the mechanical adaptor 2, the automatic conversion between the displacement datum of the guide rails and the measurement datum can be achieved. The displacement information of the movement of the guide rails is sent by the information processing module 5 to transmit the instructions.

After the mechanical adaptor 2 is connected with the MMIS 3 and MMOS 6, a compressing action is required to ensure the stability during the measurement, that is, the upper end and lower end eversion flanges of the adaptor housing 58 require are compressed with first lower end flange 32 of MMIS and the second upper end flange 52 of MMOS, respectively.

The instrument and the process of the lower end eversion flange of the adaptor housing 58 and the second upper end flange 52 of MMOS are shown in FIGs. 17-19. There are four four-bar clamp systems are provided in the embodiment, which are placed symmetrically two by two, and take the four-bar clamp system as the basic type. By changing the oil inlets and outlets of the third hydraulic cylinder 104 in clamp system, the expansion and contraction of the second piston rod 105 can be realized. When the second piston rod 105 is in a contracted state, the connecting rod 111 rotates about the first hinge column 114 as the center along the rotation direction of the third hydraulic cylinder 104, and then the pressing plate 107 tilts backward to realize the expansion of the displacement so as to provide enough space for clamping and disassembly of the workpiece, thus avoiding interference occurred during the movement in the mechanism resulting in an uncompressed state, the state is shown in FIG. 18. When the second piston rod 105 is in an expansion state, the pressing plate 107 moves forwardly, so that the roller 110 is in contact with the lower end eversion flange of the adaptor housing 58, and accordingly, the continuous pressure provided by the third hydraulic cylinder 104 is transmitted to the roller 110 to form the compressed state. The roller 110 guarantees the direction of the pressure provided by the pressing plate 107 is always vertically downward, and the state is shown in FIGs 17,19. The oil inlets and outlets instruction of the third hydraulic cylinder 104 are provided by the information processing module 5.

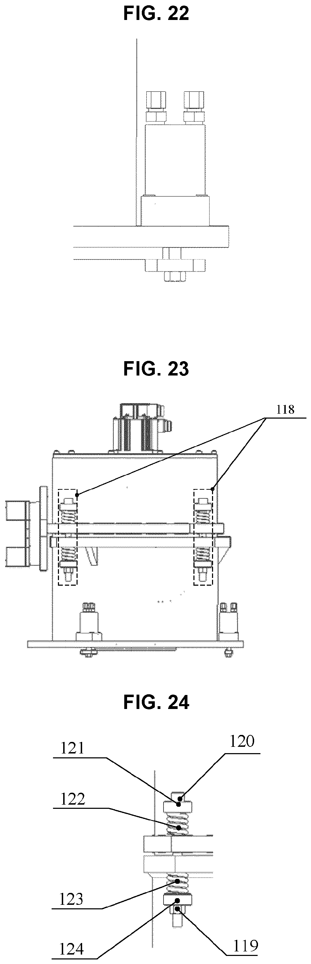

The instrument and the process of the upper end eversion flange 115 of the adaptor housing 58 and the first lower end flange 32 of MMOS are shown in FIGs. 20-22. There are three rotating hydraulic cylinders 14 in the embodiment, which are arranged along the circumferential direction of the first lower end flange 32 of MMIS. By changing the oil inlets and outlets of the rotating hydraulic cylinders 14, the third piston rod 117 can rotate circumferentially, and the compressing plate 116 arranged thereon can be rotate accordingly. When the third piston rod 117 is in an initial state, the compressing plate 116 and the upper end eversion flange 115 of the adaptor housing 58 are not contacted with each other, that is, in an uncompressed state as shown in FIGs. 20, 21; When the third piston rod 117 rotates 90 degrees and the compressing plate 116 rotates together with the third piston rod 117, the compressing plate 116 and the upper end eversion flange 115 are contacted and pressed with each other, that is, in a compressed state as shown in FIG. 22. The rotating hydraulic cylinders 14 are communicated with the information processing module 5 for transmitting oil inlet and oil outlet instructions.

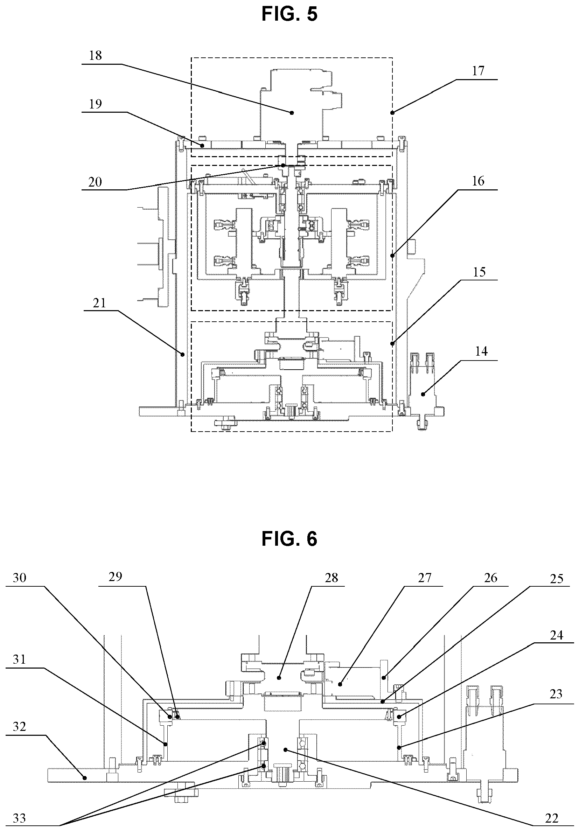

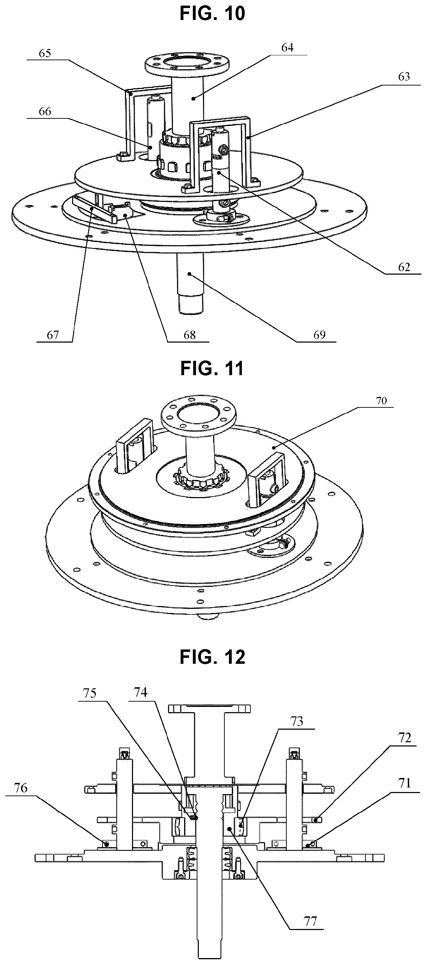

As shown in FIGs. 5,7,10-16, the embodiment discloses a comprehensive performance measurement instrument of high precision reducer for industrial robot and the method thereof, which realizes the separation, transmission and braking functions of the measurement shafting of the MMIS/MMOS. The embodiment takes test function conversion system 36 of MMOS to describe the separation, transmission and braking functions of the measurement shafting. As shown in FIGs.10,11,12,15, oppositely arranged first hydraulic cylinders 62,66 in MMOS can drive the respective MMOS ball plunger 79 on the corresponding first piston rod 78 to move. The first Ω-shape rack 63 is in contact with the MMOS ball plunger 79, and the fourth spring 80 is pressed between the first Ω-shape rack 63 and the first piston rod 78. The bottom end of the first Ω-shape rack 63 is fixed on the MMOS movable outer sleeve 72. Similarly, the first Ω-shape rack 65 is in contact with the MMOS ball plunger 79, and the fourth spring 80 is pressed between the first Ω-shape rack 65 and the first piston rod 78, and the bottom end of the first Ω-shape rack 65 is fixed on the MMOS movable outer sleeve 72. Taking the MMOS movable outer sleeve 72, the MMOS bearing 73 and the MMOS movable splined sleeve 77 as the execution module of the test function conversion system, the piston movement of the first hydraulic cylinders 62,66 can drive the execution module to move up and down so as to achieve the conversion of the three operating types. The first displacement sensor 68 in MMOS measures the distance from the MMOS movable outer sleeve 72 to the MMOS second lower end flange 35 so as to determine whether the measurement shafting of MMOS at separation state, transmission state or braking state.

The specific implementation of the measurement shafting of MMOS from separation state to transmission state and then to braking state is as follows.

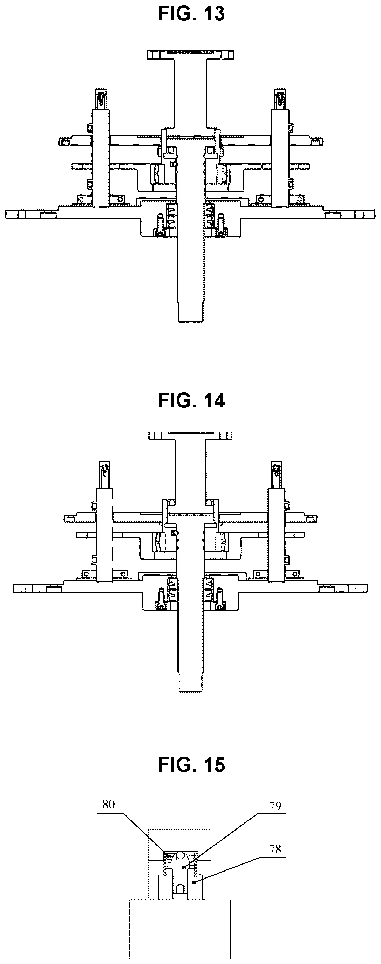

FIG.12 shows a separated state of the measurement shafting of MMOS. Under the separated state, the MMOS movable splined sleeve 77 only fits with the MMOS input shaft 69, and the MMOS output shaft 64 is in the free state, that is, the power of the loading motor 39 of the MMOS 6 cannot transmit to the MMOS output shaft 64, and the second steel ball 74 is embedded into the first second V-shape annular groove under the pressure of the third spring 75, which is acting as the mechanical auxiliary positioning method. The steps of changing the separation state to the transmission state is as follows: by the transmission of the external spline of the MMOS input shaft 69 via the loading motor 39 of the MMOS 6 (to the MMOS output shaft 64 via the loading motor output shaft 40 and gear train 44 under displacement mode of the loading motor 39), the spline teeth of the external spline of the MMOS input shaft 69 is connected with the spline teeth of the external spline of the MMOS output shaft 64. The execution module of the test function conversion system is moved under the drive of the pistons of the first hydraulic cylinders 62,66 in MMOS, and the movement stroke is measured by the first displacement sensor in MMOS 68 and the measured value is transmitted to the information processing module 5. When the MMOS movable splined sleeve 77 reaches the preset position required by the transmission state, and the information processing module 5 provides feedback signals to the first hydraulic cylinders 62,66 to stop the piston movement, so that the MMOS test function conversion system is under the transmission state. At this time, the second steel ball 74 is embedded into the second second V-shape annular groove under the pressure of the third spring 75, which is acting as the mechanical auxiliary positioning method. FIG. 13 shows the transmission state of the MMOS test function conversion system. Under the transmission state, the internal spline of the MMOS movable splined sleeve 77 is connected with the external splines of the MMOS input shaft 69 and MMOS output shaft 64, respectively; and the power of the loading motor 39 transmits to the MMOS output shaft 64. The steps of changing the transmission state to the braking state is as follows: by the transmission of the external spline of the MMOS movable splined sleeve 77 via the loading motor 39 of the MMOS 6, the phase alignment of the spline teeth of the external spline of the MMOS movable splined sleeve 77 and the spline groove of the internal spline of the first brake sleeve 70. The execution module of the test function conversion system is moved under the drive of the pistons of the first hydraulic cylinders 62,66 in MMOS, and the movement stroke is measured by the first displacement sensor in MMOS 68 and the measured value is transmitted to the information processing module 5. When the MMOS movable splined sleeve 77 reaches the preset position required by the transmission state, and the information processing module 5 provides feedback signals to the first hydraulic cylinders 62,66 to stop the piston movement, so that the MMOS test function conversion system is under the braking state. At this time, the second steel ball 74 is embedded into the third second V-shape annular groove, arranging on the top of the MMOS input shaft 69, under the pressure of the third spring 75, which is acting as the mechanical auxiliary positioning method. FIG. 14 shows the bralomg state of the MMOS test function conversion system. Under the braking state, the internal spline of the MMOS movable splined sleeve 77 is connected with the external splines of the MMOS output shaft 64, the external spline of the MMOS movable splined sleeve 77 is connected with the internal spline of the first brake sleeve 70.

The test function conversion system in MMIS 3 and MMOS 6 are basically same, the specific structural diagram of the MMIS test function conversion system 16 is shown in FIG. 16. The differences are: the second brake sleeve 84 of the MMIS test function conversion system 16 is fixed on the MMIS upper end cover 88 of test function conversion system, while the first brake sleeve 70 of the MMOS test function conversion system 36 is fixed on the inner wall of the MMOS cylinder 38; the second hydraulic cylinders 85,94 of MMIS are fixed on the second brake sleeve 84, while the first hydraulic cylinders 62,66 are fixed on the MMOS second lower end flange 35; the movement direction of the MMIS movable splined sleeve 93 is from top to bottom when changing the MMIS measurement shafting from separation state to the transmission state, while the movement direction of the MMOS movable splined sleeve 77 is from bottom to top when changing the MMOS measurement shafting from separation state to the transmission state; the MMIS ball plungers 97,103 are screwed on the one end of the first U-shape racks 82,96 respectively, and are opposite to the second hydraulic cylinders 85,94 respectively, while the MMOS ball plunger 79 is screwed to one end of the first piston rod 78 in MMOS directly. Besides, the measurement instrument requires the MMIS test function conversion system 16 and the MMOS test function conversion system 36 not to be in the separation state at the same time.

As shown in FIGs. 5-8, the embodiment discloses the measurement state of the measurement instrument according to the present invention. When the MMIS 3 is under measurement state, the data is mainly collected by the MMIS torque measurement system and the MMIS angular measurement system, and then are transmitted to the information processing module 5 for processing and analyzing. When the MMOS 6 is under measurement state, the data is mainly collected by the MMOS torque measurement system and the MMOS angular measurement system, and then are transmitted to the information processing module 5 for processing and analyzing. The first torque transducer rotor 28 is connected to the MMIS output shaft 100 and the high-precision shaft 22, and the first torque transducer stator 27 is fixed on the first fixing rack 26 and in a static test function state. The MMIS angular measurement system includes the first ring 29 and first readheads 24, 30. The second torque transducer rotor in MMOS 6 is connected to the MMOS output shaft 64 and spindle 51 of the dense ball bearing system, the second torque transducer stator 57 is fixed on the second sleeve 45, and the stator 57 is in a static test function state. The MMOS angular measurement system includes the second ring 53 and second readheads 50,54. The second readheads 50,54 are fixed on the second sleeve 48 of the dense ball bearing system by the second mounting racks 49,55, respectively. Due to the high rotation precision of the dense ball bearing system, the accuracy of the MMOS angular measurement system is guaranteed.

During operation, the measurement instrument of the present invention includes the installation and compression process of the mechanical adaptor 2 and the measurement instrument, test function selection process, the parameter measurement process and the test end process. Wherein, the installation and compression process requires that the tested reducer 60 be installed on the mechanical adaptor 2 and placed on the corresponding test station; MMIS 3 moves along the three-dimensional movement system 4 according to the instruction and is connected with the mechanical adaptor 2; and then, the test function selection process requires the MMIS test function conversion system 16 and the MMOS test function conversion system 36 to be in one of the states of separation, transmission and braking according to the corresponding parameters. According to the parameters to be tested, the parameter measurement process initiates motors of the MMIS 3 and MMOS 6 to operate and to record the values shown in the angular measurement system and torque sensor system in real time. In the test end process, the motors of the MMIS 3 and MMOS 6 are stopped, and the MMIS sensors system 15 and MMOS sensors system 37 stop collecting data, and the clamp systems in MMIS and MMOS are uncompressed to the mechanical adaptor 2, respectively. When a tested reducer 60 is under measurement, the other reducer to be tested is installed as the mechanical adaptor 2, and then the mechanical adaptor 2 where the reducer to be tested is located can be directly placed in the test station for testing after the previous tested reducer is completed, which reduces assembly time of the tested reducer 60 and the measurement instrument, and improves the detection efficiency of the measurement instrument.

The measurement instrument of the present invention can be tested by an automatic control system, which reduces manual operation. Furthermore, due to the high rigidity of the MMIS cylinder 21 and the MMOS cylinder 38, the measurement instrument of the present invention has better torsion resistance than other similar instruments.

What described above is merely a preferred embodiment of the present invention and not intended to limit the present invention. Any modifications, equivalent replacements and improvements made within the spirit and principle of the present invention should fall into the protection scope of the present invention.

## Claims

1. A comprehensive performance measurement instrument of high precision reducer for industrial robot, comprising:
a measurement module on the input side (hereinafter referred to as MMIS) (3), used for performing angular measurement and torque measurement of an input end of a tested reducer (60), and dynamic and static test functions transformation of the tested reducer under different parameters, and providing loading power for the measurement instrument;
a measurement module on the output side (hereinafter referred to as MMOS)(6), used for performing the functions transformation among angle measurement and torque measurement of an output end of the tested reducer (60), and dynamic and static test of the tested reducer, and providing loading power or loading capacity for the measurement instrument;
a mechanical adaptor (2), used for fixing the tested reducer (60); during operation, an input end of the mechanical adaptor (2) is positioned and clamped to the MMIS (3), and the output end is positioned and clamped to the MMOS (6);
a workbench (1), used as test benchmark for the measurement instrument; the MMOS (6) is suspended on the workbench (1) and extended downwardly from the workbench (1);
a three-dimensional movement system (4), the MMIS (3) is fixedly connected to the three-dimensional movement system (4), and is driven by the three-dimensional movement system (4) to realize movement along horizontal and vertical directions, as well as rotation in the plane where the horizontal plane and the vertical plane intersect;
an information processing module (5), used for performing data transmission with the three-dimensional movement system (4), the MMIS (3) and the MMOS (6).

2. The measurement instrument according to claim 1, **characterized in that** the three-dimensional movement system (4) comprises: a horizontal-direction-movement system (13), a vertical-direction-movement system (8), a rack (9) for connecting with MMIS and a rotary table system (10);
the horizontal-direction-movement system (13) is fixedly arranged on the workbench (1);
the vertical-direction-movement system (8) is connected to the horizontal-direction-movement system (13) and is capable of moving in the horizontal direction along the horizontal-direction-movement system (13);
the rotary table system (10) is connected to the vertical-direction-movement system (8) and is capable of moving in the vertical direction along the vertical-direction-movement system (8);
the horizontal-direction-movement system (13), the vertical-direction-movement system (8) and the rotary table system (10) are connected with the information processing module (5), respectively, and receive the instruction signals to drive by the information processing module (5);
the rack (9) for connecting with MMIS is used to connect the MMIS (3) and the three-dimensional movement system (4), the rack (9) is connected to the rotary table system (10), and is capable of rotating with the rotary table system (10) in the plane where the horizontal plane and the vertical plane intersect.

3. The measurement instrument according to claim 1, **characterized in that** the MMIS (3) comprises a MMIS drive system (17), a MMIS test function conversion system (16), a MMIS sensors system (15) and a MMIS cylinder (21);
the MMIS drive system (17) includes a servo motor (18) for controlling the speed, position and torque in the measurement shafting of MMIS, and a first upper end flange (19) of MMIS for fixing the servo motor (18); the first upper end flange (19) is fixedly arranged on the upper end of the MMIS cylinder (21);
the MMIS test function conversion system (16) is used to perform separation, transmission and braking functions of the measurement shafting of MMIS, so that the conversion of the dynamic and static test functions of the tested reducer (60) can be realized; the MMIS test function conversion system (16), which is arranged inside the MMIS cylinder (21), comprises an execution module, a detection module, a driving module, a braking and fixing module and a shafting module;
wherein, the execution module of the MMIS test function conversion system includes a MMIS movable outer sleeve (86), a MMIS bearing (87) and a MMIS movable splined sleeve (93); an inner ring of the MMIS bearing (87) is connected with the MMIS movable splined sleeve (93), and the outer ring is connected with the MMIS movable outer sleeve (86); the interior of the MMIS movable splined sleeve (93) is provided with an internal spline which is capable of connecting with an external spline of a MMIS input shaft (90) and an external spline of a MMIS output shaft (100) of the shafting module in MMIS; and the exterior of the MMIS movable splined sleeve (93) is provided with an external spline which is capable of connecting with an internal spline of a second brake sleeve (84) of MMIS of the braking and fixing module;
the detection module of the MMIS test function conversion system uses a second displacement sensor (91) in MMIS to detect the position of the execution module, and determines whether the MMIS movable splined sleeve (93) reaches the preset position in axial position;
the driving module of the MMIS test function conversion system includes two diametrically arranged driving sub modules; each of the driving sub module comprise a second hydraulic cylinder of MMIS, a second Ω-shape rack and a first U-shape rack; one end of the first U-shape rack is screwed on the piston rod of the second hydraulic cylinder by a screw, while the other end is screwed with a MMIS ball plunger, the ballhead of the MMIS ball plunger is placed opposite to the screw on the piston rod of the second hydraulic cylinder; a first spring is pressed between an intermediate crossbeam between the second Ω-shape rack and the ballhead of the ball plunger in MMIS; the bottom side of the second Ω-shape rack is connected to the eversion flange of the MMIS movable outer sleeve (86), so that the moving of the piston rod of the second hydraulic cylinder drives the second Ω-shape rack to move, thereby driving the execution module to move;
the braking and fixing module of the MMIS test function conversion system includes a second brake sleeve (84) in MMIS and an upper end cover (88) of the MMIS test function conversion system; the central portion of the second brake sleeve (84) is provided with an internal spline which is capable of connecting with an external spline of the MMIS movable splined sleeve (93); the second brake sleeve (84) is fixed on the upper end cover (88) of the MMIS test function conversion system, and the upper end cover (88) is fixed on the inner wall of the MMIS cylinder (21);
the shafting module of the MMIS test function conversion system includes a MMIS input shaft (90) and a MMIS output shaft (100) being coaxially arranged with each other; one end of the MMIS input shaft (90) is connected to an output shaft of the servo motor (18), while the other end penetrates the center of the upper end cover (88) of the MMIS test function conversion system and extends into the second brake sleeve (84) in MMIS, and the other end of the input shaft is opposite to the MMIS output shaft (100); one end of the MMIS output shaft (100) is connected to a first torque transducer rotor (28) of the MMIS sensors system (15), while the other end is opposite to the MMIS input shaft (90); a gap is provided between the opposing MMIS input shaft (90) and the MMIS output shaft (100), and both the opposing input shaft and the output shaft are provided with an external spline connecting with the internal spline of the MMIS movable splined sleeve (93), a central internal spline of the second brake sleeve (84) is arranged at the junction of the MMIS input shaft (90) and the MMIS output shaft (100); and the MMIS movable splined sleeve (93) is sleeved outside the MMIS input shaft (90), through the movement of the execution module, the MMIS movable splined sleeve (93) realizes three operating types of only connecting with the MMIS input shaft (90), connecting with the MMIS input shaft (90) and the MMIS output shaft (100), and connecting with the MMIS input shaft (90) and the second brake sleeve (84) in MMIS;
the second displacement sensor (91) in the detection module and the second hydraulic cylinder in the driving module of the MMIS test function conversion system are communicated with the information processing module (5), respectively; and the information processing module (5) receives data from the second displacement sensor (91) and then sends an instruction signal to the second hydraulic cylinder;
the MMIS sensors system (15) is arranged inside the MMIS cylinder (15), including a torque measurement system of MMIS, an angular measurement system of MMIS, a high-precision shaft (22), bearingset (33) and a first lower end flange (32) of MMIS; the torque measurement system comprises a first torque transducer including a first torque transducer rotor (28) and a first torque transducer stator (27) in a separated state; the first torque transducer stator (27) is connected to the information processing module (5) for transmitting data, one end of the first torque transducer rotor (28) is connected to the high-precision shaft (22), while the other end is connected to the MMIS output shaft (100); the angular measurement system includes a first ring (29) and two first readheads symmetrically placed along the radial direction of shafting; each of the first readheads is connected to the information processing module (5) for transmitting data, the first ring (29) is fixedly connected to the high-precision shaft (22) and rotates therewith; the connecting end face of the high-precision shaft (22) and the mechanical adaptor (2) is provided with the internal spline which is connected with the external spline of the second connecting shaft (61), the high-precision shaft (22) is connected with the inner ring of the bearingset (33), while the outer ring of the bearingset (33) is connected with the central hole of the first lower end flange (32) of MMIS; and the first lower end flange (32) of MMIS is fixed on the lower end of the MMIS cylinder (21).

4. The measurement instrument according to claim 3, **characterized in that** the MMIS test function conversion system (16) also comprises a mechanical auxiliary positioning instrument, including a second spring (89), a first steel ball (101) and three first V-shape annular grooves; the second spring (89) and the first steel ball (101) are embedded in the connecting part of the MMIS movable splined sleeve (93) and a shaft hole of the MMIS input shaft (90); three first V-shape annular grooves are slotted on the MMIS input shaft along the circumferential direction of the MMIS input shaft, and are respectively located at: the position of the first steel ball (101) and the second spring (89) when the internal spline of the MMIS movable splined sleeve (93) only connecting with the external spline of the MMIS input shaft (90) and the external spline of the MMIS movable splined sleeve (93) is in a free state; the position of first steel ball (101) and the second spring (89) when the internal spline of the MMIS movable splined sleeve (93) connecting with the external splines of the MMIS input shaft (90) and the MMIS output shaft (100), and the external spline of the MMIS movable splined sleeve is in a free state; the position of first steel ball (101) and the second spring (89) when the internal spline of the MMIS movable splined sleeve (93) connecting with the external spline of the MMIS output shaft (100), and the external spline of the MMIS movable splined sleeve (93) connecting with the internal spline of the second brake sleeve (84).

5. The measurement instrument according to claim 3, **characterized in that** the MMIS movable outer sleeve (86) is the bearing support connecting with the outer ring of the MMIS bearing (87); the MMIS bearing (87) is an aligning bearing, which serves as a flexible connection that drives the axial displacement of the movable outer sleeve (86) and does not affect the rotation of the MMIS movable splined sleeve (93).

6. The measurement instrument according to claim 3, **characterized in that** the bearingset (33) comprises two individual bearings arranged on the same support, and can simultaneously adjust the clearance of the two individual bearings arranged on the same support so as to ensure the rotation precision of the angular measurement system of MMIS.

7. The measurement instrument according to claim 1, **characterized in that** the MMOS (6) comprises a MMOS drive system (34), a MMOS test function conversion system (36), a MMOS sensors system (37), a MMOS cylinder (38) and a second lower end flange (35);
wherein, the MMOS drive system (34) comprises a loading motor (39) for controlling the speed, position and torque of the measurement shafting of the MMOS and a gear system that converts a high-speed low-torque provided by the loading motor to a low-speed high-torque; the output shaft (40) of the loading motor (39) is connected to an input shaft of the gear system;
the MMOS test function conversion system (36) is used to realize the separation, transmission and braking functions of the measurement shafting in MMOS so as to realize the conversion of different test functions of the tested reducer; the test function conversion system (36) is arranged inside the MMOS cylinder (38), comprising an execution module, a detection module, a braking and fixing module and a shafting module in MMOS;
The execution module comprises a MMOS movable outer sleeve (72), a MMOS bearing (73) and a MMOS movable splined sleeve (77); the inner ring of the MMOS bearing (73) is connected with the MMOS movable splined sleeve (77), and the outer ring is connected with the MMOS movable splined sleeve (77); the interior of the MMOS movable splined sleeve (77) is provided with an internal spline which is capable of connecting with an external spline of a MMOS input shaft (69) and an external spline of a MMOS output shaft (64) of the shafting module; and the exterior of the MMOS movable splined sleeve (77) is provided with an external spline which is capable of connecting with an internal spline of a first brake sleeve (70) of MMOS of the braking and fixing module;
the detection module of the MMOS test function conversion system uses a first displacement sensor (68) in MMOS to detect the position of the execution module, and determines whether the MMOS movable splined sleeve (77) reaches the preset position in axial position;
the driving module of the MMOS test function conversion system includes two diametrically arranged driving sub modules; each of the driving sub module comprise a first hydraulic cylinder in MMOS, and a first Ω-shape rack; the first hydraulic cylinder is fixed on the second lower end flange (35) of MMOS, a MMOS ball plunger (79) is screwed on the top of the first piston rod (78) of the first hydraulic cylinder; and an intermediate crossbeam between the first Ω-shape racks contacts with the ballhead of the MMOS ball plunger (79), and a fourth spring (80) is pressed between the intermediate crossbeam and the ballhead; the bottom side of the first Ω-shape rack is connected to the eversion flange of the MMOS movable outer sleeve, so that the moving of the first piston rod (78) in MMOS of the first hydraulic cylinder drives the first Ω-shape rack to move, thereby driving the execution module to move;
the braking and fixing module of the MMOS test function conversion system includes a first brake sleeve (70) which fixed on the inner wall of the MMOS cylinder (38); the central portion of the first brake sleeve (70) is provided with an internal spline which is capable of connecting with an external spline of the MMOS movable splined sleeve (77);
the shafting module of the MMOS test function conversion system includes the MMOS input shaft (69) and the MMOS output shaft (64) being coaxially arranged with each other; the MMOS input shaft (69) is the output shaft of the gear train, and one end of the MMOS input shaft (69) penetrates the center of the second lower end flange (35) of MMOS and is opposite to the MMOS output shaft (64); one end of the MMOS output shaft (64) is connected to a second torque transducer rotor (47) of the MMOS sensors system (37), while the other end is opposite to the MMOS input shaft (69); a gap is provided between the opposing MMOS input shaft (69) and the MMOS output shaft (64), and both the opposing MMOS input shaft (69) and the MMOS output shaft (64) are provided with an external spline connecting with the internal spline of the MMOS movable splined sleeve (77), a central internal spline of the first brake sleeve (70) is arranged at the junction of the MMOS input shaft (69) and the MMOS output shaft (64); and the MMOS movable splined sleeve (77) is sleeved outside the MMOS input shaft (69), through the movement of the execution module, the movable splined sleeve (77) realizes three operating types of only connecting with the MMOS input shaft (69), connecting with the MMOS input shaft (69) and the MMOS output shaft (64), and connecting with the MMOS input shaft (69) and the first brake sleeve (70) in MMOS;
the first displacement sensor (68) in the detection module and the first hydraulic cylinder in the driving module of the MMOS test function conversion system are communicated with the information processing module (5), respectively; and the information processing module (5) receives data from the first displacement sensor (68) and then sends an instruction signal to the first hydraulic cylinder;
the MMOS sensors system (37) is arranged inside the MMOS cylinder (38), including a torque measurement system of MMOS, an angular measurement system of MMOS, a dense ball bearing system and a second upper end flange (52) of MMOS; the torque measurement system comprises a second torque transducer including a second torque transducer rotor (47) and a second torque transducer stator (57) in a separated state; the second torque transducer stator (57) is connected to the information processing module (5) for transmitting data, one end of the second torque transducer rotor (47) is connected to a spindle (51) of the dense ball bearing system, while the other end is connected to the MMOS output shaft (64); the angular measurement system includes a second ring (53) and two second readheads symmetrically placed along the radial direction of shafting; each of the second readheads is connected to the information processing module (5) for transmitting data, the second ring (53) is fixedly connected to the spindle (51) of the dense ball bearing system and rotates therewith. The dense ball bearing system acting as a transmission part comprises a spindle (51) and the mechanical adaptor (2) is provided with an external involute spline which is coupled with the internal spline of the dense ball bearing system in measurement process; and the second upper end flange (52) of MMOS is fixed on the upper end face of the MMOS cylinder (38);
the second lower end flange (35) of MMOS is fixed on the lower end of the MMOS cylinder (38).

8. The measurement instrument according to Claim 7, **characterized in that** the MMOS test function conversion system (36) also comprises a mechanical auxiliary positioning instrument, including a third spring (75), a second steel ball (74) and three second V-shape annular grooves; the third spring (75) and the second steel ball (74) are embedded in the connecting part of the MMOS movable splined sleeve (77) and a shaft hole of the MMOS input shaft (69); three second V-shape annular grooves are slotted on the MMOS input shaft (69) along the circumferential direction of the input shaft, and are respectively located at: the position of the second steel ball (74) and the third spring (75) when the internal spline of the MMOS movable splined sleeve (77) only connecting with the external spline of the MMOS input shaft (69), and the external spline of the MMOS movable splined sleeve (77) is in a free state; the position of second steel ball (74) and the third spring (75) when the internal spline of the MMOS movable splined sleeve (77) connecting with the external splines of the MMOS input shaft (69) and the MMOS output shaft (64), and the external spline of the MMOS movable splined sleeve (77) is in a free state; the position of second steel ball (74) and the third spring (75) when the internal spline of the MMOS movable splined sleeve (77) connecting with the external spline of the MMOS output shaft (64), and the external spline of the MMOS movable splined sleeve (77) connecting with the internal spline of the first brake sleeve (70).

9. The measurement instrument according to Claim 7, **characterized in that** the MMOS movable outer sleeve (72) is the bearing support connecting with the inner ring of the MMOS bearing (73); the MMOS bearing (73) is an aligning bearing, which serves as a flexible connection that drives the axial displacement of the MMOS movable outer sleeve (72) and does not affect the rotation of the MMOS movable splined sleeve (77).

10. The measurement instrument according to Claim 7, **characterized in that** the dense ball bearing system comprises a second sleeve (48) and balls that are densely connected with an interference fit between the spindle (51) and the second sleeve (48); the second sleeve (48) is fixed on the inner wall of the MMOS cylinder (38), and the balls are positioned via a retainer (56) which is located between the spindle (51) and the second sleeve (48).

11. The measurement instrument according to Claim 1, **characterized in that** the mechanical adaptor (2) comprises the tested reducer (60), the second connecting shaft (61) for connecting with MMIS, the first connecting shaft (59) for connecting with MMOS and an adaptor housing (58); one end of the second connecting shaft (61) is fixed on an input end of the tested reducer (60), while the other end is provided with an external spline connecting with an internal spline of a high-precision shaft (22) in MMIS; one end of the first connecting shaft (59) is fixed on an output end of the tested reducer (60), while the other end is provided with an external spline connecting with an internal spline of the spindle (51) of the dense ball bearing system; a eversion flange is provided on each side of the adaptor housing (58), one eversion flange drives a compressing plate (116) via a plurality of rotating hydraulic cylinders (14) to press and fix on the MMIS (3), and the other eversion flange is fixed on the MMOS (6) via a four-bar clamp system.

12. The measurement instrument according to Claim 11, **characterized in that** a plurality of rotating hydraulic cylinders (14) are fixed and arranged along the circumferential direction of the first lower end flange (32) of MMIS (3); each of the rotating hydraulic cylinders (14) include a third piston rod (117) and the compressing plate (116), the compressing plate (116) is in the shape of an oblong hole, an ellipse, or a rectangle, and the center of the compressing plate (116) is fixed on the top end of the third piston rod (117), and can rotate with the rotation of the third piston rod (117); by changing the oil inlets and outlets of the rotating hydraulic cylinders (14), the third piston rod (117) can rotate circumferentially, and the compressing plate (116) arranged thereon can be rotated accordingly, thus compressing the upper end eversion flange (115) of the adaptor housing (58); the distance between the compressing plate (116) and the first lower end flange (32) of MMIS equals to the thickness of the upper end eversion flange (115) of the adaptor housing (58); the rotating hydraulic cylinders (14) are communicated with the information processing module (5) for transmitting oil inlet and oil outlet instructions.

13. The measurement instrument according to Claim 11, **characterized in that** a plurality of four-bar clamp system are provided, each of the four-bar clamp system comprise a third hydraulic cylinder (104) in clamp system, a second piston rod (105) of the third hydraulic cylinder in clamp system, a pressing plate (107), a connecting rod (111) and a base plate (113); the end face of the third hydraulic cylinder (104) and the base plate (113) are fixed on the workbench (1); one end of the connecting rod (111) is hinged on the base plate (113), and the other end is connected to the middle part of the pressing plate (107) through a second hinge column (108); one end of the pressure plate (107) is connected to the second piston rod (105) of the third hydraulic cylinder through a third hinge column (106), and the other end is connected with a roller (110); by changing the oil inlets and outlets of the third hydraulic cylinder (104) in clamp system, the expansion and contraction of the second piston rod (105) can be realized, and the pressing plate (107) connected with the second piston rod (105) moves back and forth simultaneously so that the lower end eversion flange of the adaptor housing (58) is compressed or uncompressed; the third hydraulic cylinder (104) is communicated with the information processing module (5) for transmitting oil inlet and oil outlet instructions.

14. The measurement instrument according to Claim 1, **characterized in that** the connection part between the MMIS (3) and the three-dimensional movement system (4) is arranged with a flexible mechanism (118) for automatic converting the displacement datum of the guide rail in MMIS and the measurement datum.

15. The measurement instrument according to Claim 14, **characterized in that** the flexible mechanism (118) is used for the flexible connection between the rack (9) for connecting with MMIS in the three-dimensional displacement system (4) and the flange of the MMIS cylinder; a plurality of flexible mechanism (118) are provided, and are circumferentially arranged along the connection between the MMIS (3) and the three-dimensional displacement system (4); each of the flexible mechanism (118) comprise a first retaining ring (121), a second retaining ring (124), a fifth spring (122), a sixth spring (123), a bolt (120) and a nut (119); the rack (9) for connecting with MMIS has same coaxial holes at the same positions around the flange of the MMIS cylinder; the bolts (120) penetrate the coaxial holes and the nuts (119) are screwed to the bottom ends of the bolts, respectively; the first retaining ring (121) and the second retaining ring (124), which are connected to the bolts (120), are positioned on both sides of the rack (9) for connecting with MMIS and the flange of the MMIS cylinder, respectively; the fifth spring (122) and sixth spring (123) are sleeved on the bolts (120); and the fifth spring (122), in a compressed state, is located between the first retaining ring (121) and the rack (9) for connecting with MMIS; and the sixth spring (123), in a compressed state, is located between the second retaining ring (124) and the flange of the MMIS cylinder; the inner diameters of the fifth spring (122) and sixth spring (123) are larger than the outer diameter of the screw thread of the bolt (120).
